(19) Europäisches Patentamt
European Patent Office
Office européen des brevets

(11) **EP 4 676 017 A1**

(12) **EUROPEAN PATENT APPLICATION**

(43) Date of publication:
**07.01.2026 Bulletin 2026/02**

(21) Application number: **25186245.4**

(22) Date of filing: **30.06.2025**

(51) International Patent Classification (IPC):
*H04N 1/00* (2006.01)

(52) Cooperative Patent Classification (CPC):
**H04N 1/00002; H04N 1/00005; H04N 1/00026; H04N 1/00047; H04N 1/0035**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **01.07.2024 JP 2024106280**

(71) Applicant: **CANON KABUSHIKI KAISHA Tokyo 146-8501 (JP)**

(72) Inventor: **KIMURA, Toshinori Tokyo, 146-8501 (JP)**

(74) Representative: **TBK Bavariaring 4-6 80336 München (DE)**

(54) **INSPECTING IMAGE FORMED ON SHEET, INSPECTION APPARATUS, AND IMAGE FORMING SYSTEM**

(57) An inspection apparatus (50) obtains an inspection image generated by reading a sheet on which an image is formed, inspects the inspection image based on the reference image, computes a first scaling factor that is a scaling factor of the reference image in a case where an entirety of the reference image is displayed within a display region of a display device, and displays the reference image in the display region at a second scaling factor greater than the first scaling factor in a case where the first scaling factor is less than a first threshold.

**F I G. 11**

```
          ┌─────────────────────┐
          │ INSPECTION SETTINGS │
          └──────────┬──────────┘
                     │
   ┌─────────────────────────────────┐
   │  OBTAIN SIZE OF REFERENCE IMAGE │ ── S1101
   └─────────────────┬───────────────┘
                     │
   ┌─────────────────────────────────┐
   │  COMPUTE ENLARGEMENT RATE Ma1   │ ── S1102
   └─────────────────┬───────────────┘
                     │
S1103 ─────◇ Ma1 < Mth? ◇────── NO ────────────────────────┐
               │ YES                                        │
S1104 ──◇ IS THERE DESIGNATED ◇── NO ──────┐               │
         ◇ ENLARGEMENT RATE?  ◇            │               │
               │ YES                       │               │
   ┌──────────────────────┐ S1105  ┌──────────────────────┐ S1111
   │  OBTAIN DESIGNATED    │        │ COMPUTE ENLARGEMENT  │
   │  ENLARGEMENT RATE     │        │      RATE Ma2        │
   └──────────┬───────────┘        └──────────┬───────────┘
              │ S1106                          │ S1112              │ S1121
   ┌──────────────────────┐        ┌──────────────────────┐ ┌──────────────────────┐
   │ PARTIAL ENLARGED      │        │ PARTIAL ENLARGED     │ │ OVERALL ENLARGED     │
   │ DISPLAY A             │        │ DISPLAY B            │ │ DISPLAY              │
   └──────────┬───────────┘        └──────────────────────┘ └──────────────────────┘
              │
       ┌────────────┐
       │   RETURN   │
       └────────────┘
```

EP 4 676 017 A1

**Description**

TECHNICAL FIELD

The present disclosure relates to a method of inspecting images formed on sheets, an inspection apparatus, and an image forming system.

BACKGROUND

In commercial printing, printed products generated by an image forming apparatus are inspected by an inspection apparatus. Examples of such inspection content include inspecting corners of sheets for folding, inspecting for foreign objects adhering to sheets, inspecting for streaks in images, or inspecting for black spots. When a user sets inspection content in an inspection apparatus, the inspection apparatus inspects the printed product according to that inspection content and displays an inspection result on a display device. Japanese Patent Laid-Open No. 2022-140540 proposes displaying an area around an anomalous location in an image obtained by an inspection apparatus in an enlarged manner to improve the visibility of the inspection result.

SUMMARY

However, setting the enlarged display in accordance with the overall size of the displayed image has not been taken into account.
The present disclosure in its first aspect provides inspection apparatus as specified in Claim 1. Optional features are specified in claim 2 to 14.
The present disclosure in its second aspect provides an image forming system as specified in Claim 15.
Features of the present disclosure will become apparent from the following description of embodiments with reference to the attached drawings. The following description of embodiments are described by way of example.

BRIEF DESCRIPTION OF THE DRAWINGS

The accompanying drawings, which are incorporated in and constitute a part of the specification, illustrate embodiments of the present disclosure, and together with the description, serve to explain the principles of the embodiments.

FIG. 1 is a diagram illustrating an image forming system.
FIG. 2 is a diagram illustrating a control apparatus.
FIG. 3 is a diagram illustrating an inspection controller.
FIG. 4 is a diagram illustrating a stacking controller.
FIG. 5 is a flowchart illustrating a control method executed by the control apparatus.
FIG. 6 is a flowchart illustrating an inspection method executed by an inspection apparatus.
FIG. 7 is a flowchart illustrating a control method executed by a stacking apparatus.
FIG. 8 is a diagram illustrating a print settings screen.
FIG. 9 is a diagram illustrating an inspection settings screen.
FIG. 10 is a diagram illustrating an overall enlarged display.
FIG. 11 is a flowchart illustrating inspection settings.
FIG. 12 is a diagram illustrating a partial enlarged display B.
FIG. 13 is a diagram illustrating a partial enlarged display A.
FIG. 14 is a diagram illustrating a result confirmation screen.
FIG. 15 is a flowchart illustrating inspection settings.
FIGS. 16A to 16C are diagrams illustrating an aspect ratio.

DESCRIPTION OF THE EMBODIMENTS

Hereinafter, embodiments will be described in detail with reference to the attached drawings. Note, the following embodiments are not intended to limit the scope of the claims. Multiple features are described in the embodiments, but it is not the case that all such features are required, and multiple such features may be combined as appropriate. Furthermore, in the attached drawings, the same reference numerals are given to the same or similar configurations, and redundant description thereof is omitted.

First Embodiment

1. Image Forming System

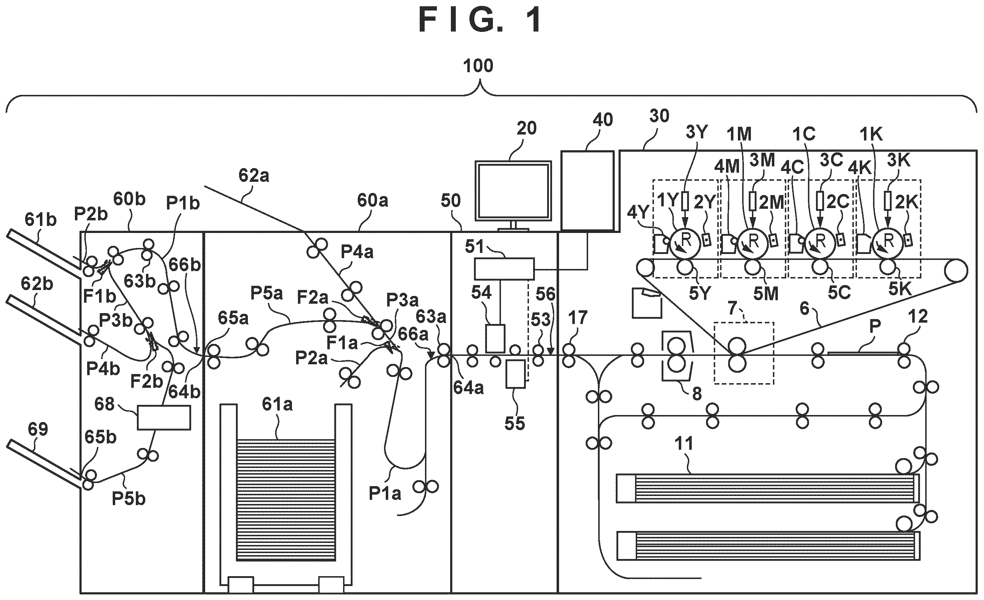

As illustrated in FIG. 1, an image forming system 100 includes an operation unit 20, an image forming apparatus 30, a control apparatus 40, an inspection apparatus 50, and stacking apparatuses 60a and 60b. The image forming apparatus 30, the inspection apparatus 50, and the stacking apparatuses 60a and 60b have separate housings. It is sufficient for the number of the stacking apparatuses 60 to be at least one. The image forming system 100 may be called an "image inspection system". In this example, the stacking apparatus 60a may be called a "sheet stacker" or a "sheet conveyance apparatus". The stacking apparatus 60b may be called a "post-processing apparatus" or "finisher" having functions for post-processing. Although constituent elements that are the same as or similar to each other are given the same reference signs, the lowercase letters at the ends (e.g., a and b) may be omitted when describing matters common to those elements.

The operation unit 20 includes a display device that outputs information to a user and an input device that accepts instructions from the user (e.g., a touch panel sensor).

The image forming apparatus 30 forms a toner image on a sheet P in accordance with Y, M, C, and K color signals supplied from the control apparatus 40. The letters Y, M, C, and K appended to the reference signs indicate the toner colors yellow, magenta, cyan, and black, respectively. When matters common to all four colors are described, the letters Y, M, C, and K will be omitted from the reference signs.

A photosensitive member 1 is an image carrier that carries an electrostatic latent image and a toner image. A charger 2 uniformly charges the surface of the photosensitive member 1. An exposure device 3 forms an electrostatic latent image by irradiating the photosensitive member 1 with a laser beam according to the color signal supplied from the control apparatus 40. A developer 4 uses toner to develop the electrostatic latent image and forms a toner image. A primary transfer roller 5 transfers the toner image from the photosensitive member 1 to an intermediate transfer belt 6. Here, Y, M, C, and K toner images are superimposed to form a color image. The intermediate transfer belt 6 conveys the toner image to a secondary transfer section 7.

A sheet cassette 11 is a holding unit that holds a large number of sheets P. A conveyance roller 12 feeds the sheet P held in the sheet cassette 11 and conveys the sheet P along a conveyance path. The image forming apparatus 30 may include two or more sheet cassettes.

The secondary transfer section 7 transfers the toner image from the intermediate transfer belt 6 to the sheet P. A fixer 8 fixes the toner image onto the sheet P by applying heat and pressure to the sheet P and the toner image. A discharge roller 17 discharges the sheet P to the inspection apparatus 50.

The inspection apparatus 50, implemented as a reading apparatus, is an apparatus that reads an image formed on a sheet P and inspects the quality of the image. In other words, the inspection apparatus 50 is an apparatus that inspects whether the image formed on the sheet P satisfies an inspection standard. The sheet P on which the image is formed is sometimes called a "printed product".

The image on the sheet P being conveyed at a reading position by conveyance rollers 53 is read by image sensors 54 and 55. The image sensors 54 and 55 include a light source that illuminates the sheet P and a CMOS sensor. "CMOS" is an acronym for "Complementary Metal Oxide Semiconductor".

The sheet P from which the image has been read is discharged to the stacking apparatus 60a. Note that for a sheet P which is determined to be a "no go" (i.e., does not satisfy the inspection standard; this may also be called "failing") by the inspection apparatus 50, the control apparatus 40 may control the image forming apparatus 30 to form the same image on a new sheet P. An inlet of the inspection apparatus 50 is provided with a sheet sensor 56 that detects the sheet P.

The stacking apparatus 60a receives the sheet P discharged from the inspection apparatus 50 through an inlet 64a, and discharges (stacks) the sheet P onto sheet trays 61a and 62a serving as stacking units, discharges the sheet P from an outlet 65a, or the like. A sheet sensor 66a that detects the sheet P is provided at the inlet 64a.

A conveyance path P1a extending from the inlet 64a branches to a conveyance path P2a and a conveyance path P3a at a branch position where a flapper F1a is installed. The sheet P that has been conveyed along the conveyance path P1a is guided to the conveyance path P2a or the conveyance path P3a by the flapper F1a. The sheet tray 61a is provided at an outlet of the conveyance path P2a. The sheet tray 61a is a large-capacity sheet stacking unit on which a large number of sheets P can be stacked. For example, a sheet P which has passed the image inspection (quality inspection) may be stacked on the sheet tray 61a.

The conveyance path P3a branches to a conveyance path P4a and a conveyance path P5a at a branch position where a flapper F2a is installed. The sheet P that has been conveyed along the conveyance path P3a is guided to the conveyance path P4a or the conveyance path P5a by the flapper F2a.

The sheet tray 62a is provided at an outlet of the conveyance path P4a. For example, a sheet P having an image quality determined to have failed by the inspection apparatus 50 may be stacked on the sheet tray 62a. However, a sheet P having an image quality determined to have failed may be discharged to an apparatus in a later stage (e.g., a stacking apparatus 60b) from the outlet 65a. A sheet P determined to be "OK" (i.e., satisfies the inspection standard; this may also be called "passing") may be stacked onto the sheet tray 62a. The conveyance path P5a extends to the outlet 65a.

The stacking apparatus 60b in a later stage may be connected to the outlet 65a. Additionally, as with the stacking apparatus 60b, a sheet tray 69 may be provided at the outlet 65a. The sheet tray 69 can also stack sheets P for which the image quality is determined to have failed and sheets P for which the image quality is determined to have passed. In this manner, the type of the sheet P discharged to the sheet trays 61a, 61b, 62a, 62b, and 69 is determined in advance on the basis of settings made by the user.

Each of the conveyance paths P1a, P2a, P3a, P4a, and P5a is provided with one or more conveyance rollers 63a. The conveyance rollers 63a convey the sheet P from the upstream side to the downstream side in a conveyance direction of the sheet P. The conveyance rollers 63a may be roller pairs, each including two rollers that convey the sheet P with the sheet P located therebetween.

The stacking apparatus 60b receives the sheet P discharged from the stacking apparatus 60a through an inlet 64b, and stacks (discharges) the sheet P onto the sheet trays 61b, 62b, and 69 serving as stacking units. A sheet sensor 66b that detects the sheet P is provided at the inlet 64b.

A conveyance path P1b extending from the inlet 64b branches to a conveyance path P2b and a conveyance path P3b at a branch position where a flapper F1b is installed. The sheet P that has been conveyed along the conveyance path P1b is guided to the conveyance path P2b or the conveyance path P3b by the flapper F1b. The sheet tray 61b is provided at an outlet of the conveyance path P2b. For example, a sheet P which has passed the image inspection (quality inspection) may be stacked on the sheet tray 61b.

The conveyance path P3b branches to a conveyance path P4b and a conveyance path P5b at a branch position where a flapper F2b is installed. The sheet P that has been conveyed along the conveyance path P3b is guided to the conveyance path P4b or the conveyance path P5b by the flapper F2b.

The sheet tray 62b is provided at an outlet of the conveyance path P4b. For example, a sheet P having an image quality determined to have failed by the inspection apparatus 50 may be stacked on the sheet tray 62b. However, a sheet P having an image quality determined to have failed may be discharged to the sheet tray 69 from an outlet 65b. A sheet P determined to be "OK" (i.e., satisfies the inspection standard; this may also be called "passing") may be stacked onto the sheet tray 62b. The conveyance path P5b extends to the outlet 65b via a post-processing unit 68.

The sheet trays 61b, 62b, and 69 provided in the stacking apparatus 60b may be called an upper tray, a middle tray, and a lower tray, respectively. A post-processing unit 68 may include a stapling processor that bundles the sheets P discharged from the stacking apparatus 60a to form a sheet bundle and staples the sheet bundle. The post-processing unit 68 may include a binding processor that folds sheet bundle in half. The post-processing unit 68 may include a cutting processor that cuts a sheet bundle.

Each of the conveyance paths P1b, P2b, P3b, P4b, and P5b is provided with one or more conveyance rollers 63b. The conveyance rollers 63b convey the sheet P from the upstream side to the downstream side in the conveyance direction of the sheet P. The conveyance rollers 63b may be roller pairs, each including two rollers that convey the sheet P with the sheet P located therebetween.

It is sufficient for the number of stacking apparatuses 60 connected to the downstream side of the inspection apparatus 50 to be at least one. In addition, it is sufficient for the number of sheet trays 61, 62, and 69 provided in the stacking apparatus 60 connected to the downstream side of the inspection apparatus 50 to be at least two in total. In addition, it is sufficient for the number of flappers F1 and F2 to be at least one. The flappers F1 and F2 may be called "guide plates", "guide members", or "branch claws".

2. Controller

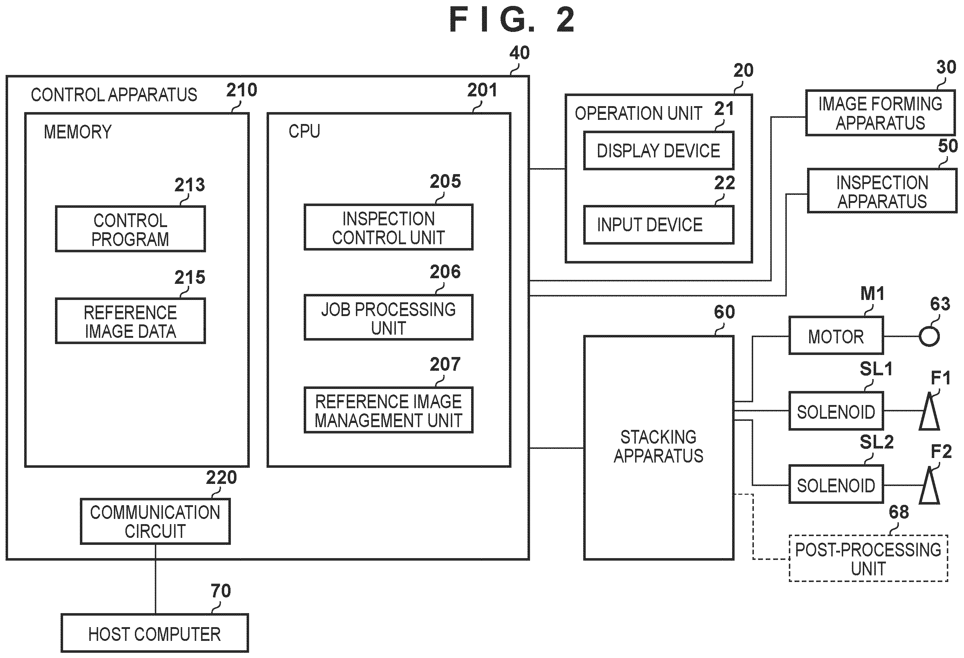

FIG. 2 illustrates the control apparatus 40 in detail. A CPU 201 implements a plurality of functions by executing a control program 213 stored in a memory 210. The CPU 201 may include a plurality of processors or CPU cores. Some or all of the plurality of functions implemented by the CPU 201 may be implemented by hardware circuitry different from the CPU 201. Such hardware circuitry includes, for example, application-specific integrated circuits (ASICs), field-programmable gate arrays (FPGAs), and image processors.

The memory 210 is a storage device including a read-only memory (ROM), a random access memory (RAM), a solid-state drive (SSD), a hard disk drive (HDD), and the like. A communication circuit 220 includes a network interface that connects to a local area network, and a communication interface that communicates with the image forming apparatus 30, the inspection apparatus 50, and the stacking apparatuses 60.

The CPU 201 communicates with the image forming apparatus 30, the inspection apparatus 50, and the stacking apparatuses 60 through the communication circuit 220. The CPU 201 also communicates with a host computer 70, which is a type of information processing apparatus, through the communication circuit 220. The host computer 70 may send print jobs to the control apparatus 40.

The operation unit 20 includes a display device 21 and an input device 22. The operation unit 20 may include an audio circuit and a speaker that output messages to a user. The CPU 201 functions as an inspection control unit 205, a job processing unit 206, and a reference image management unit 207 in accordance with the control program 213.

The inspection control unit 205 obtains information on the results of image inspections (e.g., pass/fail, the read image, and a cause of the failure) from the inspection apparatus 50 through the communication circuit 220. The inspection control unit 205 displays the inspection result received from the inspection apparatus 50 on the display device 21. The inspection control unit 205 may apply a method for enlarged display of a reference image (described later) to the enlarged display of an inspection image included in the inspection result. The inspection control unit 205 may communicate the inspection result using audio. The inspection control unit 205 may send the inspection result to the host computer 70 by email or the like. The inspection control unit 205 changes the discharge destination of the sheet P in accordance with the inspection result. For example, on the basis of the inspection result, the inspection control unit 205 controls the flappers F1 and F2 to discharge the sheet P into the sheet tray, among the sheet trays 61, 62, and 69, which has been designated by the user.

The job processing unit 206 controls print jobs for printing images onto the sheets P, stacking jobs for stacking sheet bundles in the stacking apparatus 60a, post-processing jobs for sheet bundles in the stacking apparatus 60b, and the like. The job processing unit 206 may store job data (job information) required to execute the jobs in the memory 210.

The reference image management unit 207 controls the inspection apparatus 50 in accordance with instructions input from the input device 22, reads a printed product (a sheet P on which a reference image is printed), and generates reference image data 215. Here, the "reference image" is an image that is compared with the read image of a printed product (an inspection image) and serves as a criterion for passing the image inspection. The reference image management unit 207 generates the reference image data 215 on the basis of image data input from the host computer 70, and saves the reference image data 215 in the memory 210. The reference image management unit 207 sends the reference image data 215 from the memory 210 to the inspection apparatus 50 upon receiving a reference image request from the inspection apparatus 50 through the communication circuit 220.

The stacking apparatuses 60 drive a motor M1 to rotate the conveyance rollers 63 in accordance with control commands from the job processing unit 206. The stacking apparatuses 60 drive solenoids SL1 and SL2 to switch the flappers F1 and F2 in accordance with control commands from the job processing unit 206. As a result, the sheet P is guided and conveyed to either the sheet tray 61, the sheet tray 62, or the stacking apparatus 60 in a later stage. For example, if the result of the inspection by the inspection apparatus 50 is "no go", the job processing unit 206 controls the stacking apparatuses 60 to discharge the sheet P determined to be a "no go" to the sheet tray 62. The image forming apparatus 30 also includes a solenoid that drives flappers and a motor that drives conveyance rollers, but these are not shown.

### 3. Inspection Apparatus

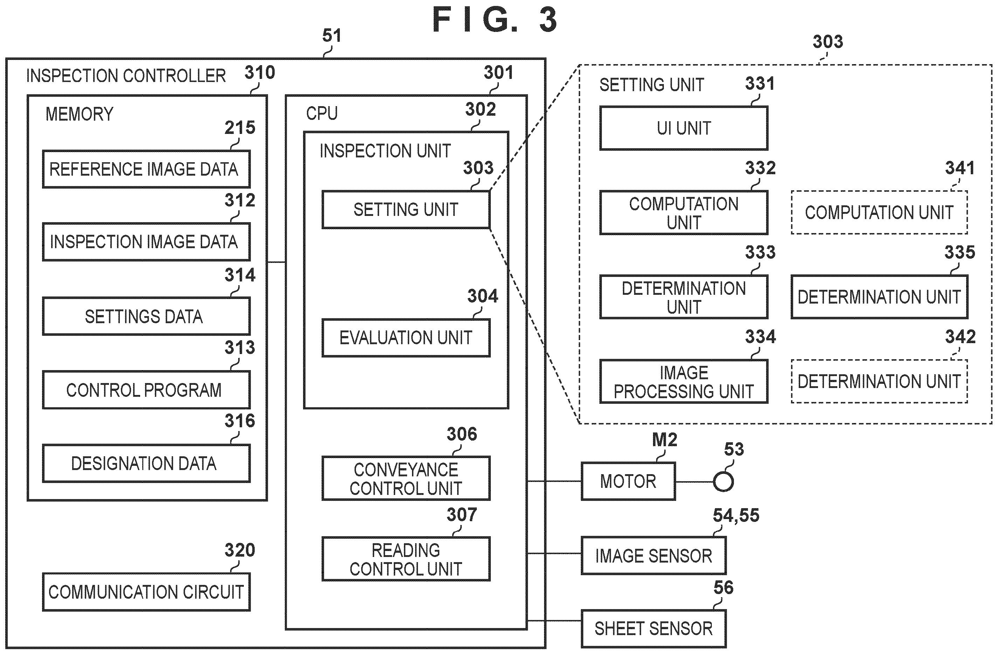

FIG. 3 illustrates an inspection controller 51 provided in the inspection apparatus 50 in detail. A CPU 301 implements a plurality of functions by executing a control program 313 stored in a memory 310. Some or all of the plurality of functions may be implemented by hardware circuitry different from the CPU 301.

The memory 310 is a storage device including a ROM, a RAM, an SSD, an HDD, and the like. The CPU 301 is connected to the control apparatus 40 through a communication circuit 320, and receives various types of commands and data, sends inspection results, and the like. The CPU 301 stores the reference image data 215 received from the control apparatus 40 through the communication circuit 320 in the memory 310.

An inspection unit 302 executes image inspection according to settings data 314 stored in the memory 310, and sends an inspection result to the control apparatus 40. Note that the CPU 201 may execute the inspection, or an external PC (e.g., the host computer 70) connected to the image forming system 100 may execute the inspection. "PC" is an acronym for "Personal Computer".

Inspection image data (read image data) 312 is image data generated by the image sensors 54 and 55 reading the sheet P. The inspection image data 312 is also temporarily saved in the memory 310.

A setting unit 303 determines inspection settings to be applied to the inspection image data 312, generates the settings data 314, which defines the inspection settings, and stores the settings data 314 in the memory 310. Note that the setting unit 303 may include, for example, a UI unit 331, a computation unit 332, a determination unit 333, an image processing unit 334, and a determination unit 335. The UI unit 331 displays an inspection settings screen on the display device 21 of the operation unit 20, accepts inspection settings input through the inspection settings screen and the input device 22, and the like. The UI unit 331 functions as a setting acceptance unit. On the basis of the reference image data 215 and the size of a predetermined display region in the inspection settings screen, the computation unit 332 computes an enlargement rate Ma necessary for displaying the entire reference image in the display region. The unit of the enlargement rate Ma may be a percentage. By determining whether the enlargement rate Ma obtained by the computation unit 332 is less than a threshold Mth, the determination unit 333 determines an enlargement rate to actually be applied to the reference image. The determination unit 335 determines whether designation data 316 is stored in the memory 310. The designation data 316 is input by a user through the operation unit 20, and indicates a designated enlargement rate Md to be applied to the reference image. The image processing unit 334 performs image processing for enlarging or reducing the reference image to display the reference image in the display region. The image processing unit 334 may also be called an enlargement unit or a magnification unit. A computation unit 341 and a determination unit 342 are optional, and will be described in detail in the second embodiment.

On the basis of the detection result from the sheet sensor 56, an evaluation unit 304 determines whether a leading end of the sheet P has reached the inspection apparatus 50. When the sheet P reaches the inspection apparatus 50, the evaluation unit 304 controls the image sensors 54 and 55 through a reading control unit 307 to read the sheet P and obtain the inspection image data 312. On the basis of the settings data 314, the evaluation unit 304 compares the reference image data 215 with the inspection image data 312 and determines whether the image formed on the sheet P and the shape of the sheet P satisfy inspection standards. Here, inspection content, an inspection region, and the inspection standards may be included in the settings data 314. For example, if the inspection content is "misalignment detection", the evaluation unit 304 may determine that the inspection is passed if the amount of misalignment between the position of the image in the reference image data 215 and the position of the image in the inspection image data 312 is no greater than a predetermined value. Here, the position of the image is the position of the image formed on the sheet P. The evaluation unit 304 may determine that the sheet P has failed the inspection if the amount of misalignment exceeds the predetermined value. In other words, the amount of misalignment between the position of the image in the reference image data 215 and the position of the image in the inspection image data 312 being no greater than the predetermined value corresponds to the inspection standard being satisfied. Meanwhile, the amount of misalignment between the position of the image in the reference image data 215 and the position of the image in the inspection image data 312 being greater than the predetermined value corresponds to the inspection standard not being satisfied.

If the inspection content is set to "black spot detection", the evaluation unit 304 may determine that the inspection is passed if the size of a black spot which is not present in the image in the reference image data 215, but which is present in the image in the inspection image data 312, is no greater than a determination threshold. In other words, a black spot corresponds to a noise image which is absent from the image corresponding to the reference image data 215, but which is present in an image corresponding to the inspection image data 312 to which reduction processing has been applied. The evaluation unit 304 may determine that the inspection has failed if the size of the black spot exceeds the determination threshold. In other words, the size of the black spot not exceeding the determination threshold corresponds to the inspection standard being satisfied. On the other hand, the size of the black spot exceeding the determination threshold corresponds to the inspection standard not being satisfied.

Although misalignment detection and black spot detection are described in the present embodiment as the inspection content, these are merely examples. For example, streak detection or the like may be included as the inspection content. "Streak detection" refers to detecting a streak-shaped image that is not present in the original image. In other words, a streak corresponds to a noise image which is absent from the image corresponding to the reference image data 215, but which is present in an image corresponding to the inspection image data 312 to which reduction processing has been applied. Streaks can occur when it is necessary to clean, replace, or repair a component involved in image formation. In other words, determination processing for determining whether a "streak" is present may be performed by finding the degree to which the image corresponding to the reference image data 215 matches the image corresponding to the inspection image data 312 to which reduction processing (image processing) has been applied.

In the present embodiment, the relative positions of the image in the reference image data 215 and the image in the inspection image data 312 are inspected when the inspection content is "misalignment detection", but this is merely one example. For example, the absolute position of an edge of the sheet P in the image in the inspection image data 312 may be inspected. In this case, if the distance between the absolute position of the image in the reference image data 215 and the absolute position of the image in the inspection image data 312 is no greater than the threshold, the inspection is determined to have passed. If the distance exceeds the threshold, the inspection is determined to have failed.

The evaluation unit 304 generates an inspection result indicating the determination result. The evaluation unit 304 sends the inspection result to the control apparatus 40 through the communication circuit 320.

A conveyance control unit 306 drives a motor M2 to rotate the conveyance rollers 53. The reading control unit 307 controls the image sensors 54 and 55 to read the sheet P and generate the inspection image data 312. The image sensor 54 reads a first surface of the sheet P, and the image sensor 55 reads a second surface of the sheet P. This enables images on both sides of the sheet P to be inspected in the present embodiment.

4. Stacking Apparatuses

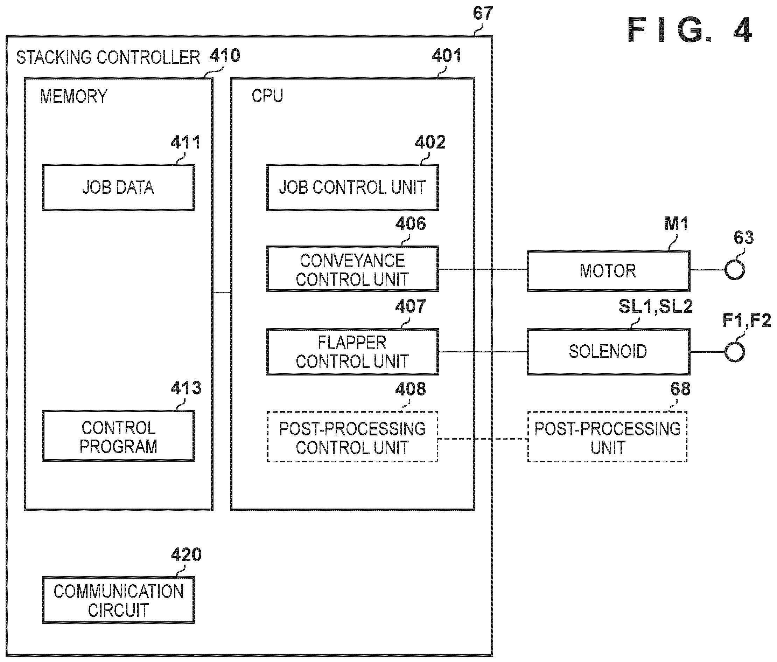

FIG. 4 illustrates a stacking controller 67 provided in each of the stacking apparatuses 60 in detail. A CPU 401 implements a plurality of functions by executing a control program 413 stored in a memory 410. Some or all of the plurality of functions may be implemented by hardware circuitry aside from the CPU 401.

The memory 410 is a storage device including a ROM, a RAM, an SSD, an HDD, and the like. The CPU 401 is connected to the control apparatus 40 through a communication circuit 420, and receives various types of commands and data, sends execution results, and the like.

A job control unit 402 executes job data 411 received from the control apparatus 40 through the communication circuit 420. The job data 411 includes information indicating the content of the job, for example. The job data 411 is temporarily stored in the memory 410.

A conveyance control unit 406 starts the rotation of the motor M1 in accordance with a rotation command received from the control apparatus 40. The conveyance control unit 406 stops the rotation of the motor M1 in accordance with a stop command received from the control apparatus 40. The conveyance rollers 63 driven by the motor M1 rotate, stop, or the like as a result.

A flapper control unit 407 drives the solenoids SL1 and SL2 to switch the flappers F1 and F2 in accordance with switching commands received from the control apparatus 40 for each sheet P. The discharge destination of the sheet P is set as a result. Instead of switching commands received from the control apparatus 40, the flappers F1 and F2 may be controlled on the basis of the inspection result received from the inspection apparatus 50. For example, a sheet P determined to have failed is discharged to the sheet tray 62a of the stacking apparatus 60a. A sheet P determined to have passed is discharged to the sheet tray 61a or to the stacking apparatus 60b.

In FIG. 1, the stacking apparatus 60b is a post-processing apparatus, and includes a post-processing control unit 408. The post-processing control unit 408 controls the post-processing unit 68 in accordance with post-processing execution commands received from the control apparatus 40.

5. Image Inspection Flowchart

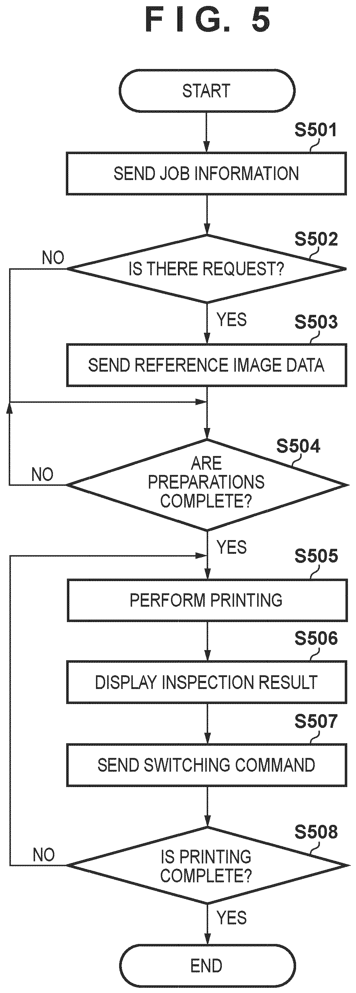

FIG. 5 is a flowchart illustrating printing processing executed by the CPU 201 of the control apparatus 40. The CPU 201 executes the following processing when printing is instructed to start through the operation unit 20.

In step S501, the CPU 201 (the job processing unit 206) generates the job information, including sheet information, discharge destination information, and the like, and sends the job information to the inspection apparatus 50. The sheet information includes the size, the number, and the like of the sheets P. The discharge destination information includes identification information of one of the stacking apparatuses 60a and 60b to serve as the discharge destination, and identification information a passing tray and a failing tray. The "passing tray" is a sheet tray to which sheets P which have passed the inspection are discharged. The "failing tray", meanwhile, is a sheet tray to which sheets P which have not passed the inspection are discharged.

In step S502, the CPU 201 (the inspection control unit 205) determines whether a request has been received from the inspection apparatus 50. This "request" is a request signal for requesting the control apparatus 40 to send the reference image data 215. If no request has been received, the CPU 201 moves the sequence to step S504. If a request has been received, the CPU 201 moves the sequence to step S503.

In step S503, the CPU 201 (the inspection control unit 205) reads out the reference image data 215 from the memory 210 and sends the reference image data to the inspection apparatus 50.

In step S504, the CPU 201 (the job processing unit 206) determines whether a notification indicating preparations are complete has been made by the inspection apparatus 50. The CPU 201 moves the sequence to step S505 when a notification indicating preparations are complete has been made by the inspection apparatus 50.

In step S505, the CPU 201 (the job processing unit 206) prints onto the sheet P by controlling the image forming apparatus 30. The sheet P is discharged from the image forming apparatus 30 to the inspection apparatus 50.

In step S506, the CPU 201 (the inspection control unit 205) receives the inspection result from the inspection apparatus 50 and displays the inspection result on the display device 21. For example, the inspection control unit 205 receives the inspection image data 312 from the inspection apparatus 50 and displays the inspection image on the display device 21 on the basis of the inspection image data 312. Furthermore, the inspection control unit 205 may superimpose which of a plurality of inspection areas has failed on the inspection image and display the resulting image on the display device 21. The inspection control unit 205 may display the reason for the failure (e.g., an optical character recognition (OCR) failure, a barcode decoding failure, a black spot, a black streak, or the like) on the display device 21. The inspection control unit 205 may enlarge the inspection image on the basis of the inspection image data 312 and display the image on the display device 21. The reference image enlargement processing flows into the inspection image enlargement processing.

In step S507, the CPU 201 (the job processing unit 206) generates a switching command in accordance with the inspection result, and sends the switching command to the stacking apparatuses 60a and 60b. If the inspection result indicates a pass, a switching command is created such that the sheet P is discharged into the passing tray (e.g., the sheet tray 61a). However, if the inspection result indicates a failure, a switching command is created such that the sheet P is discharged into the failing tray (e.g., the sheet tray 62a). Note that if the inspection result indicates a failure, the CPU 201 (the job processing unit 206) may re-execute the job for the page that has failed.

In step S508, the CPU 201 (the job processing unit 206) determines whether the printing on the basis of the print job is complete. In other words, the CPU 201 determines whether printing is complete for all pages. If a page to be printed remains, the CPU 201 moves the sequence to step S505, and prints the next page. If no pages remain to be printed, the CPU 201 ends the print job.

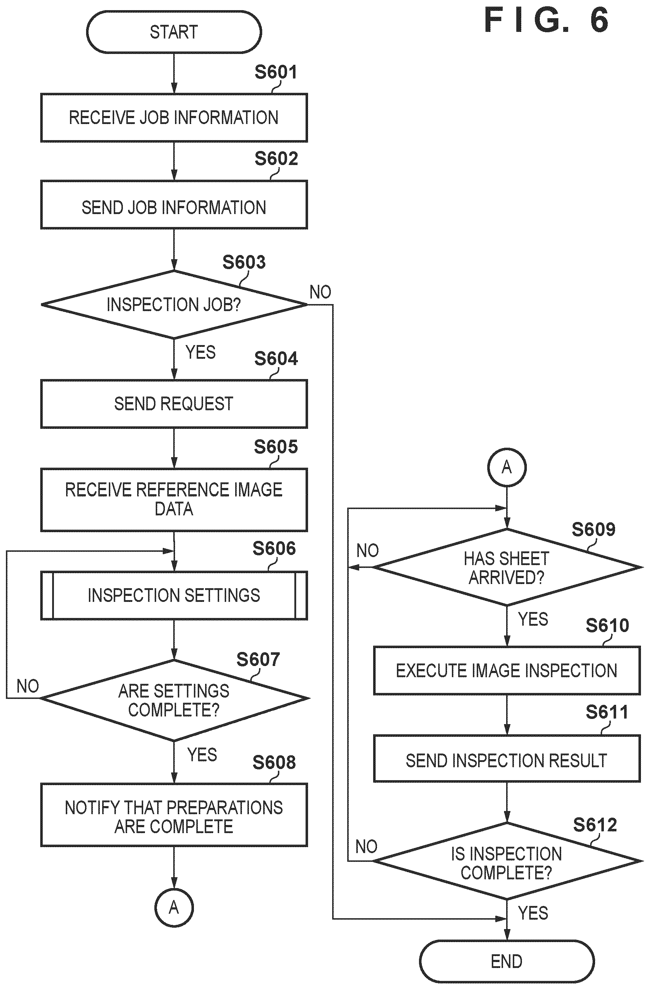

FIG. 6 is a flowchart illustrating inspection processing executed by the CPU 301 of the inspection apparatus 50.

In step S601, the CPU 301 receives the job information from the control apparatus 40. The job information may be stored in the memory 310. Alternatively, the job information may be stored in the memory 310 as part of the settings data 314.

In step S602, the CPU 301 sends (transfers) the job information to the stacking apparatus 60a, which is connected as a later stage of the inspection apparatus 50.

In step S603, the CPU 301 analyzes the job information and determines whether the job information instructs an inspection job to be executed. If no inspection job is instructed, the inspection apparatus 50 executes a conveyance job for conveying the sheet P to the stacking apparatus 60a in a later stage. If an inspection job is instructed, the CPU 301 moves the sequence to step S604.

In step S604, the CPU 301 sends, to the control apparatus 40, a request for the reference image data 215.

In step S605, the CPU 301 receives the reference image data 215 from the control apparatus 40. The reference image data 215 is stored in the memory 310.

In step S606, the CPU 301 (the setting unit 303) executes the inspection settings. The inspection settings will be described in detail later. In step S607, the CPU 301 (the setting unit 303) determines whether the inspection settings are complete. The CPU 301 moves the sequence from step S607 to step S608 when the inspection settings are complete.

In step S608, the CPU 301 notifies the control apparatus 40 that preparations are complete. The notification that preparations are complete may also be sent to the stacking apparatuses 60a and 60b in later stages.

In step S609, the CPU 301 determines whether a sheet P has arrived at the inspection apparatus 50 on the basis of a detection signal output from the sheet sensor 56. A "sheet P arriving at the inspection apparatus 50" means that the sheet sensor 56 has detected the leading end of the sheet P. When a sheet P arrives at the sheet sensor 56, the CPU 301 moves the sequence to step S610.

In step S610, the CPU 301 (the reading control unit 307 and the inspection unit 302) executes the image inspection designated by the settings data 314. The reading control unit 307 reads the sheet P using the image sensors 54 and 55, and generates the inspection image data 312. Furthermore, the inspection unit 302 inspects the inspection image data 312 in accordance with the inspection settings designated by the settings data 314. For example, the inspection unit 302 compares the inspection image data 312 with the reference image data 215 and determines whether the image formed on the sheet P satisfies passing criteria.

In step S611, the CPU 301 (the inspection unit 302) sends the inspection result to the control apparatus 40. Note that if the job information designates the stacking apparatus 60a as the discharge destination, the inspection result may be sent to at least the stacking apparatus 60a.

In step S612, the CPU 201 determines whether the image inspection is complete on the basis of the job information. If there is still a page remaining to be inspected, the CPU 301 moves the sequence from step S612 to step S609 and waits for the next sheet P to arrive. If no pages remain to be inspected, the CPU 301 ends the job.

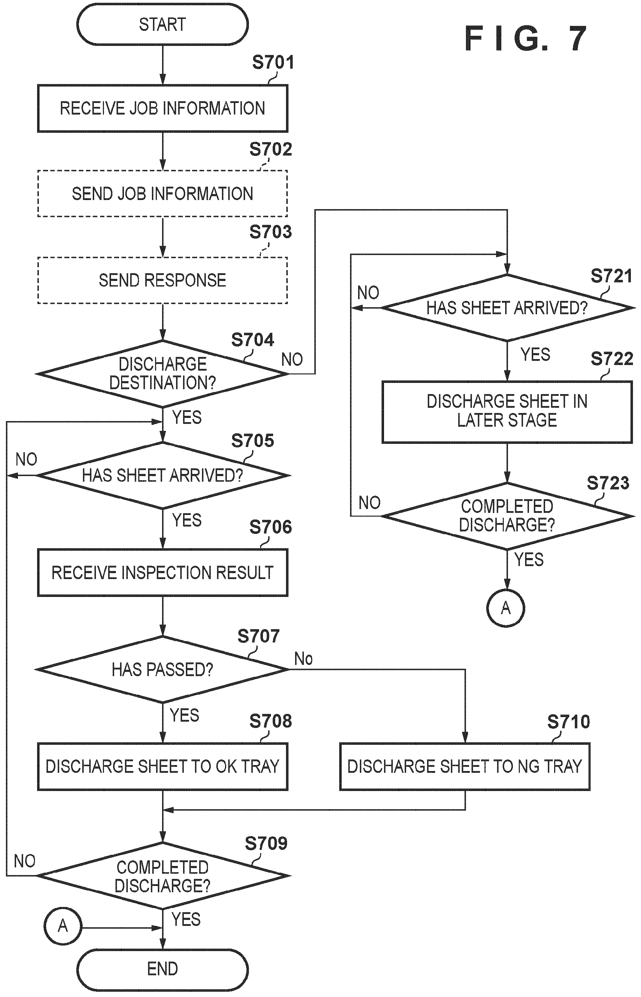

FIG. 7 is a flowchart illustrating conveyance and discharge processing executed by the CPU 401 of the stacking apparatuses 60.

In step S701, the CPU 401 (the job control unit 402) receives the job information from the inspection apparatus 50 or the stacking apparatus 60 on the upstream side. Note that if a stacking apparatus 60 is present on the downstream side, the CPU 401 moves the sequence from step S701 to step S702. However, if a stacking apparatus 60 is not present on the downstream side, the CPU 401 moves the sequence from step S701 to step S704.

In step S702, the CPU 401 (the job control unit 402) sends the job information to the stacking apparatus 60 on the downstream side. Note that if the stacking apparatus 60 is the stacking apparatus 60 furthest on the downstream side, in step S703, a response indicating that the job information has been successfully received is sent to the inspection apparatus 50 or the stacking apparatus 60 on the upstream side. The stacking apparatus 60 on the upstream side forwards the response to the inspection apparatus 50.

In step S704, the CPU 401 determines whether it itself (i.e., the stacking apparatus 60) is designated as the discharge destination on the basis of the job information. If the sheet P will pass through the stacking apparatus 60 itself and be discharged to a stacking apparatus 60 in a later stage, the CPU 401 moves the sequence to step S721.

In step S721, the CPU 401 determines whether the sheet P has arrived on the basis of the detection signal from the sheet sensor 66. When the sheet P arrives, the CPU 401 moves the sequence to step S722.

In step S722, the CPU 401 (the flapper control unit 407) controls the motor M1 and the solenoids SL1 and SL2 to discharge the sheet P to the stacking apparatus 60 in the later stage.

In step S723, the CPU 401 determines whether there is a sheet P to be discharged on the basis of the job information. If there is a sheet P remaining to be discharged, the CPU 401 moves the sequence to step S721. If there is no sheet P remaining to be discharged, the CPU 401 completes the conveyance job.

On the other hand, if the stacking apparatus 60 itself is designated as the discharge destination, the CPU 401 moves the sequence from step S704 to step S705.

In step S705, the CPU 401 determines whether the sheet P has arrived on the basis of the detection signal from the sheet sensor 66. When the sheet P arrives, the CPU 401 moves the sequence to step S706.

In step S706, the CPU 401 receives the inspection result or the switching command from the inspection apparatus 50 or the control apparatus 40.

In step S707, the CPU 401 determines whether the sheet P has passed the inspection on the basis of the inspection result. If the sheet P has passed the inspection, the CPU 401 moves the sequence to step S708. Note that if a switching command is received instead of the inspection result, the CPU 401 moves the sequence from step S707 to step S708 or step S710 on the basis of the switching command.

In step S708, the CPU 401 (the conveyance control unit 406 and the flapper control unit 407) controls the motor M1 and the solenoids SL1 and SL2, and discharges the sheet P to the passing tray. If the sheet P has not passed the inspection, the CPU 401 moves the sequence from step S707 to step S710. In step S710, the CPU 401 controls the motor M1 and the solenoids SL1 and SL2, and discharges the sheet P to the failing tray. The passing tray and the failing tray are designated in advance by the job information.

In step S709, the CPU 401 determines whether the discharge is complete on the basis of the job information. For example, if there is a sheet P remaining to be discharged, the CPU 401 moves the sequence from step S709 to step S705. If there is no sheet P remaining to be discharged, the CPU 401 completes the discharge job.

6. Details of Inspection Settings

6-1. Print Settings Screen

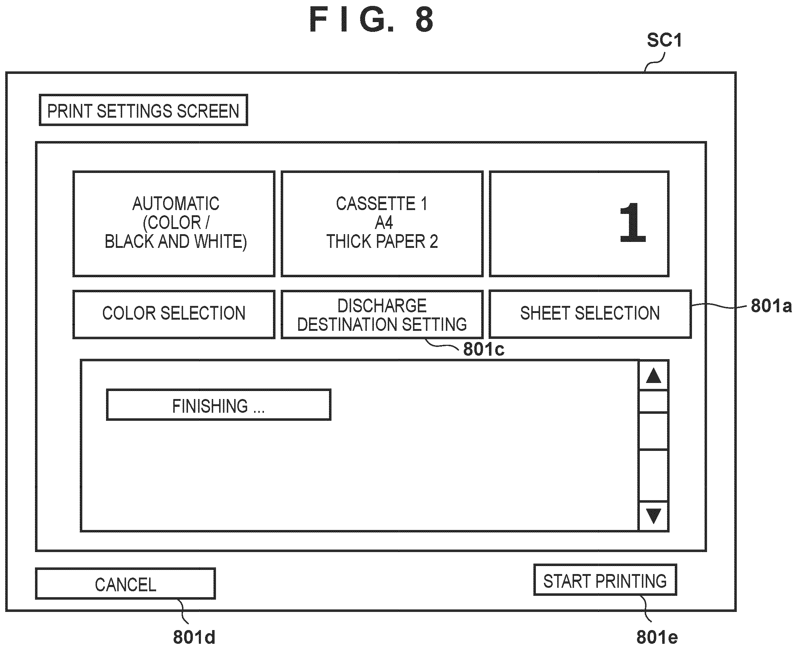

FIG. 8 illustrates a print settings screen SC1. The print settings screen SC1 may be called a "job input screen". A button 801a is a button for designating of the size of the sheet P to be printed on (including the length of the sheet in the conveyance direction), the basis weight, and the sheet cassette 11. A button 801c is a button for instructing a transition from the print settings screen SC1 to a discharge destination settings screen. The discharge destination of failing sheets and the discharge destination of passing sheets are set in the discharge destination settings screen. A button 801d is a button for instructing the content of the settings to be cancelled. When the button 801d is operated by a human operator (a user), the screen transitions to a predetermined default screen. A button 801e is a button for instructing printing to start. Note that the designated enlargement rate Md may be set through the print settings screen SC1.

6-2. Inspection Settings Screen

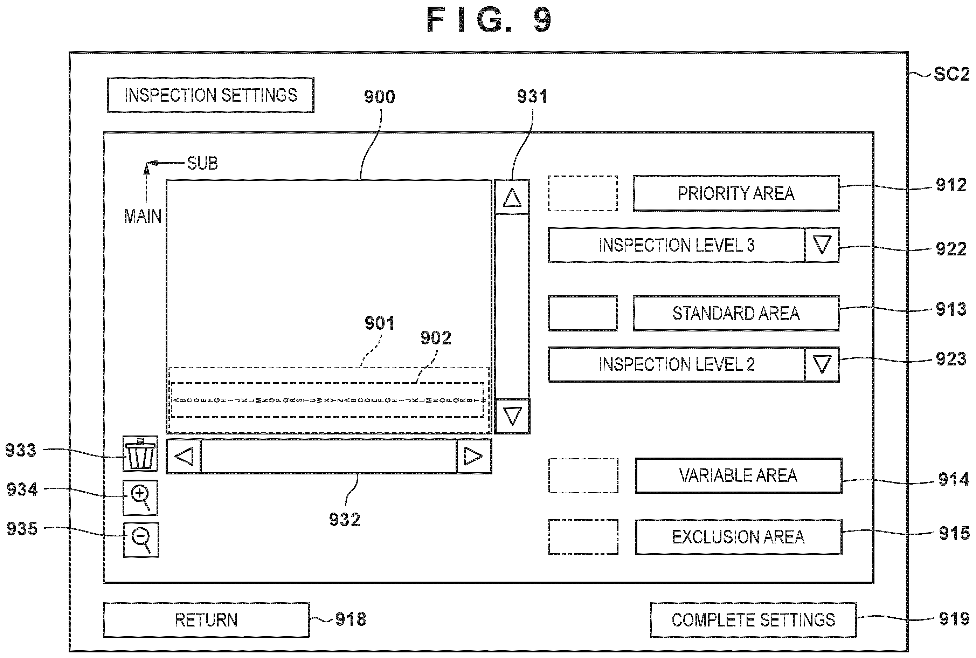

FIG. 9 illustrates an inspection settings screen SC2 displayed on the display device 21 by the UI unit 331 in step S606. The inspection settings screen SC2 is a screen that accepts instructions from the human operator for setting an inspection area for the quality inspection by the inspection apparatus 50. A display region 900 displays a reference image 901, an inspection area 902, and the like. In this example, the reference image 901 and the inspection area 902 are displayed superimposed in the display region 900.

Scroll bars 931 and 932 may be disposed around the display region 900. The scroll bar 931 is a control for moving the reference image 901 displayed in the display region 900 parallel to the main scanning direction. The scroll bar 932 is a control for moving the reference image 901 displayed in the display region 900 parallel to the sub scanning direction. The sub scanning direction is orthogonal to the main scanning direction. A button 933 is a button for discarding existing settings set for the reference image 901. An enlarge button 934 is a button for enlarging the reference image 901 displayed in the display region 900. A reduce button 935 is a button for reducing the reference image 901 displayed in the display region 900.

The inspection area and an exclusion area are set using a mouse or a touch panel that is part of the input device 22. The inspection area 902 is a priority area set by operating a button 912. The priority area is, for example, an inspection area to be inspected with a high level of accuracy. In this example, the priority area is indicated by a broken line frame. A menu 922 is a pull-down menu for setting an inspection level (inspection accuracy) to be applied to the inspection area 902. The pull-down menu may be called a "drop-down list". In this example, inspection level 1 has the lowest inspection accuracy, and the inspection accuracy increases as the number of the inspection level increases.

The inspection area 902 may be a standard area set by operating a button 913. The "standard area" is, for example, an inspection area inspected according to standard content. A menu 923 is a pull-down menu for setting an inspection level (inspection accuracy) to be applied to the inspection area 902. In this example, inspection level 1 has the lowest inspection accuracy, and the inspection accuracy increases as the number of the inspection level increases.

The inspection area 902 may be a variable area set by operating a button 914. The "variable area" is a variable area in which a variable element is printed. The "variable element" is a print object that changes for each sheet P, such as numerical data when printing forms, the address when addresses are printed onto envelopes, and the like. Note that the variable area may be enclosed within a dot-dash line.

The exclusion area is an area that is set not to be inspected by operating a button 915. For example, the region surrounded by a double dot-dash line (e.g., a background image) does not require a highly-accurate inspection. The background image may therefore be set to the exclusion area.

In this manner, the inspection level can be set for each of regions present in the print target. The user can therefore set appropriate passing criteria. A printed product having a permissible quality is determined to pass, which reduces wasteful reprinting and improves productivity. The wasteful discarding of sheets P is also reduced.

A button 918 is a button for instructing the screen to return to the print settings screen SC1, which is the original screen. The button 918 may be implemented as a cancel button. In this case, when the button 918 is pressed, the inspection settings input through the inspection settings screen SC2 are discarded. If the button 918 is implemented as a cancel button, an OK button for applying the inspection settings and returning to the print settings screen SC1 is also provided. A button 919 is an OK button for completing inspection settings. When the button 919 is pressed, the setting unit 303 generates the settings data 314, including the inspection content and information regarding the inspection area input through the inspection settings screen SC2, and stores the settings data 314 in the memory 310.

The sizes of the sheets P include standard sizes (e.g., A4, B4, and letter) and non-standard sizes (e.g., long sizes). A long-sized sheet is a sheet having longer than a predetermined length in the sub scanning direction. For example, a sub scanning length of the long-sized sheet P is 487.7 mm. The long-sized sheet P may also be called long-sized paper. Long-sized paper be used for advertisements on overhead banners and the like, for example.

In FIG. 9, the reference image 901 is an image generated by reading long-sized paper on which vertical text is printed. In this manner, when the entirety of a reference image or an inspection image generated by reading a printed product on long-sized paper is displayed in the display region 900, text in that image may be difficult for humans to see. As a result, it may be difficult for the user to set the inspection area 902 correctly.

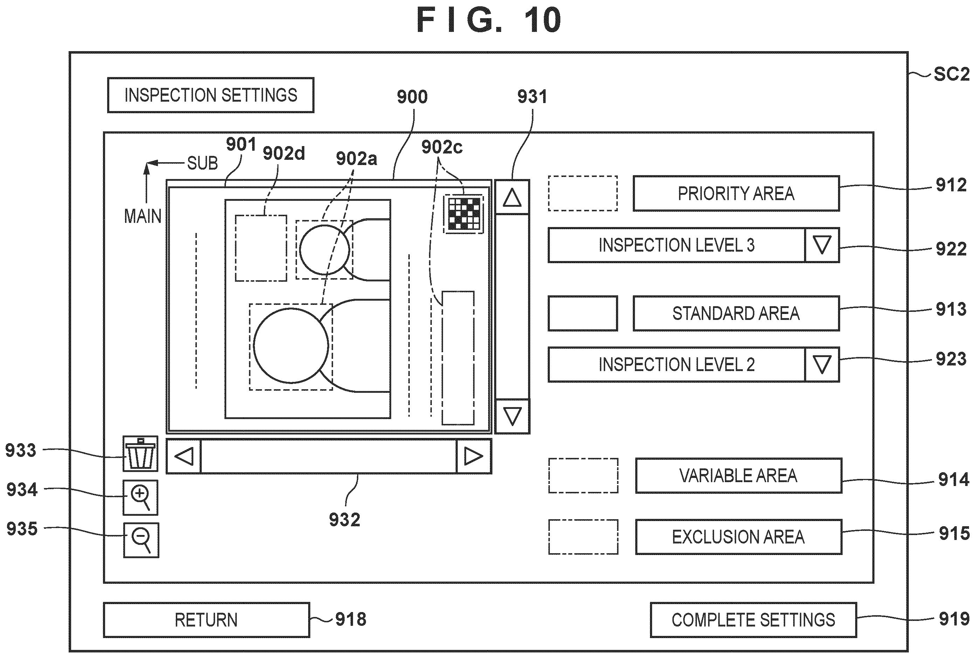

FIG. 10 illustrates an example in which an A4R-sized (210 mm × 297 mm) reference image 901 is displayed in the display region 900 of the inspection settings screen SC2. In this example, a priority area 902a is set for each of two portraits. The priority area 902a is an inspection area 902 where high inspection accuracy is required. A variable area 902c is set for a two-dimensional barcode and text, respectively. The variable area 902c is an inspection area 902 in which the image to be inspected may differ from page to page. An exclusion area 902d is set above one of the two portraits. The exclusion area 902d is an area explicitly designated as not being subject to inspection.

When the button 933 is touched, the settings for the inspection area 902 last rendered are canceled, and a frame indicating the inspection area 902 is cleared. When the enlarge button 934 is touched once, the enlargement rate Ma of the reference image 901 increases by one step. When the reduce button 935 is touched once, the enlargement rate Ma of the reference image 901 decreases by one step. The scroll bars 931 and 932 may be activated when the reference image 901 does not fit within the display region 900.

By operating the enlarge button 934 and the reduce button 935, the user appropriately adjusts the enlargement rate Ma of the reference image 901 such that the inspection area 902 for the reference image 901 can be set more easily. Note that if the enlargement rate Ma is appropriate in the initial state of the reference image 901, the enlargement rate Ma need not be manually adjusted by the user, which reduces the burden on the user. By operating the scroll bars 931 and 932, the user displays an area of interest of the reference image 901 in the display region 900, and sets the inspection area 902 to the area of interest.

In general, an enlargement rate Ma at which the user can easily set the inspection area 902 will be an enlargement rate Max, at which the main scanning length of the reference image 901 and the main scanning length of the display region 900 are substantially the same. Alternatively, the enlargement rate Ma will be an enlargement rate May at which the sub scanning length of the reference image 901 and the sub scanning length of the display region 900 are substantially the same. In this case, the area of interest can be displayed in the display region 900 by the user operating only one of the scroll bars 931 and 932.

Accordingly, in the present embodiment, the enlargement rate Ma of the reference image 901 is set according to the size of the reference image 901, to a value that makes it easy for the user to set the inspection area 902. The enlarge button 934 can therefore be substantially unnecessary. Alternatively, the number of times the user must operate the enlarge button 934 will be reduced.

6-3. Flowchart of Inspection Settings

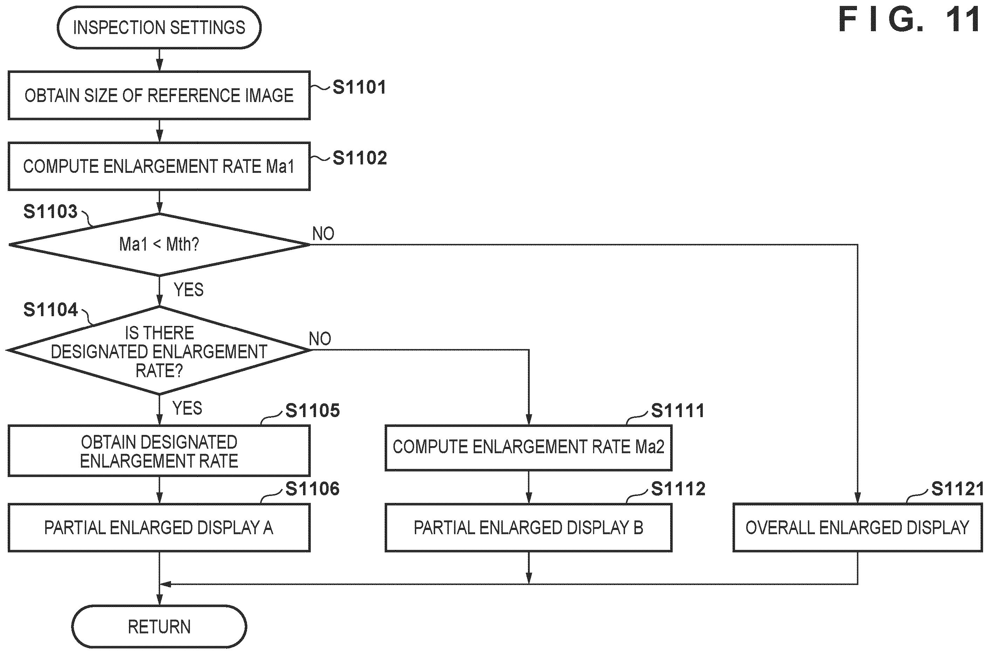

FIG. 11 is a flowchart illustrating the details of step S606. In step S1101, the CPU 301 (the setting unit 303) obtains the size of the reference image 901 on the basis of the reference image data 215 stored in the memory 310. Alternatively, the CPU 301 may obtain size information by sending a request to the CPU 201 of the control apparatus 40. The size information may be information indicating a length, such as 210 mm (main scanning length X) × 297 mm (sub scanning length Y). Alternatively, the size information may be information including a number of pixels in the main scanning direction and a number of pixels in the sub scanning direction. The memory 310 may store a mathematical formula or table that can be used by the CPU 301 and that can convert lengths and pixel numbers to each other.

In step S1102, the CPU 301 (the computation unit 332) computes an enlargement rate Ma1 at which the entirety of the reference image 901 falls within the display region 900, on the basis of the display size of the display region 900 and the image size of the reference image 901. The computation unit 332 is an example of a scaling factor computation unit that computes a first scaling factor, which is a scaling factor of the inspection image when the entirety of the inspection image is displayed in the display region of the display unit. For example, the computation unit 332 computes the enlargement rate Max in the main scanning direction at which a main scanning length X0 of the display region 900 matches a main scanning length X1 of the reference image 901. Likewise, the computation unit 332 computes the enlargement rate May in the sub scanning direction at which a sub scanning length Y0 of the display region 900 matches a sub scanning length Y1 of the reference image 901. The computation unit 332 determines the smaller of the two enlargement rates Max and May as the enlargement rate Ma1.

In step S1103, the CPU 301 (the determination unit 333) determines whether the enlargement rate Ma1 is less than the threshold Mth. The threshold Mth is 100%, for example. If the enlargement rate Ma1 is at least the threshold Mth, the CPU 301 moves the sequence from step S1103 to step S1121. In step S1121, the CPU 301 (the image processing unit 334 and the UI unit 331) executes the overall enlarged display of the reference image 901 (a first mode). For example, the image processing unit 334 enlarges the reference image 901 at the enlargement rate Ma1. The UI unit 331 displays the entirety of the enlarged or reduced reference image 901 in the display region 900 at the enlargement rate Ma1. On the other hand, if the enlargement rate Ma1 is less than the threshold Mth, the CPU 301 moves the sequence from step S1103 to step S1104.

In step S1104, the CPU 301 (the determination unit 335) determines whether the designated enlargement rate Md (the designation data 316) set in advance by the user is stored in the memory 310. If the designated enlargement rate Md is present, the CPU 301 moves the sequence from step S1104 to step S1105.

In step S1105, the CPU 301 (the image processing unit 334) obtains the designated enlargement rate Md (the designation data 316) from the memory 310. In step S1106, the CPU 301 (the image processing unit 334 and the UI unit 331) performs a partial enlarged display A of the reference image 901 (a second mode). For example, the image processing unit 334 enlarges the reference image 901 at the designated enlargement rate Md. The UI unit 331 displays a part of the reference image 901 enlarged at the designated enlargement rate Md in the display region 900. On the other hand, if the designated enlargement rate Md is not present, the CPU 301 moves the sequence from step S1104 to step S1111.

In step S1111, the CPU 301 (the computation unit 332) computes an enlargement rate Ma2 for partial enlargement. For example, the computation unit 332 computes the enlargement rate Ma2 (= Mx) in the main scanning direction at which the main scanning length X0 of the display region 900 matches the main scanning length X1 of the reference image 901.

In step S1112, the CPU 301 (the image processing unit 334 and the UI unit 331) performs a partial enlarged display B (a third mode). For example, the image processing unit 334 enlarges the reference image 901 at the enlargement rate Ma2. In this manner, the image processing unit 334 functions as an enlargement unit that enlarges the reference image at a second scaling factor greater than the first scaling factor when the first scaling factor is less than a first threshold. The UI unit 331 displays part or all of the reference image 901 enlarged at the enlargement rate Ma2 in the display region 900.

6-4. Method for Computing Enlargement Rate

The enlargement rate Ma1 can be calculated through the following equation.

Mx = main scanning length X0 of display region 900/main scanning length X1 of reference image 901 $\times$ 100

My = sub scanning length Y0 of display region 900/sub scanning length Y1 of reference image 901 $\times$ 100

$$Ma1 = min (Mx, My) \qquad ...Eq1$$

Here, min() is a function that selects a minimum value among a plurality of values. A method for finding the enlargement rate Ma1 for an A4R-sized reference image 901 illustrated in FIG. 10 will be introduced as an example. When the resolution is 1200 dpi, a maximum display range of the display region 900 is 330.2 mm (the main scanning length X0) $\times$ 487.7 mm (the sub scanning length Y0). The A4R size is 210 mm (the main scanning length X1) $\times$ 297 mm (the sub scanning length Y1). Therefore, the maximum enlargement rate Max in the main scanning direction is 330.2 mm/210 mm

$\times$ 100 = 157%. The maximum enlargement rate May in the sub scanning direction is 487.7 mm/297 mm $\times$ 100 = 164%. Therefore, the enlargement rate Ma1 is 157%. When the enlargement rate Ma1 is greater than 100%, the reference image 901 is enlarged. When the enlargement rate Ma1 is less than 100%, the reference image 901 is reduced.

6-5. Overall Enlarged Display (Step S1121)

As already illustrated in FIG. 10, the entire reference image 901 is displayed in the display region 900. When the size of the reference image 901 is smaller than the displayable size of the display region 900, the reference image 901 is displayed having been enlarged to the greatest extent possible. This makes it easy for the user to make the inspection settings. In this example, the size of the reference image 901 is A4R, and thus the enlargement rate Ma1 is 157%. The UI unit 331 does not need to activate the scroll bars 931 and 932.

6-6. Partial Enlarged Display B (Step S1112)

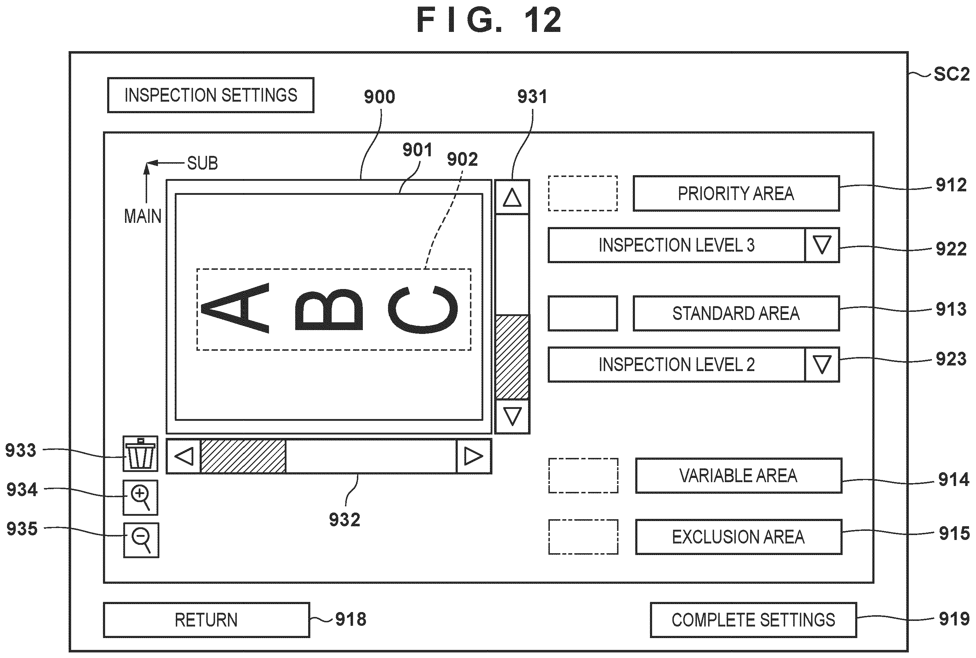

FIG. 12 illustrates an example of the partial enlarged display B. In this example, the size of the reference image 901 is a long size. Accordingly, the reference image 901 is enlarged such that the main scanning length of the reference image 901 is equal to the main scanning length X0 of the display region. As a result of this enlargement processing, only a part of the reference image 901 in the main scanning direction is displayed in the display region 900. In other words, the other part of the reference image 901 is outside the display region 900, and thus the other part is not displayed in the display region 900. The enlarged reference image 901 is larger than the display region 900, and the UI unit 331 therefore activates the scroll bar 932. The UI unit 331 changes the part of the reference image 901 displayed in the display region 900 in response to the user operating the scroll bar 932. In this manner, the partial enlarged display B is a display mode in which one of the scroll bars 931 and 932 is activated, the other is deactivated, and a part of the reference image 901 is enlarged and displayed.

Incidentally, the enlargement rate Ma1 in this example is found according to Equation Eq1 (step S1102).

$$Mx = 330.2 \text{ mm}/330.2 \text{ mm} \times 100 = 100\%$$

$$My = 487.7 \text{ mm}/1300 \text{ mm} \times 100 = 37.5\%$$

$$Ma1 = \min(Mx, My) = 37.5\%$$

Here, it is assumed that the designated enlargement rate Md is not present. Accordingly, the enlargement rate Ma2 is computed as 100% in step S1111, and the partial enlarged display B is performed in step S1112.

In this example, it is assumed that the UI unit 331 activates only the scroll bar 932 among the scroll bars 931 and 932. However, the UI unit 331 may activate only the scroll bar 931. In this case, the sub scanning length of the enlarged reference image 901 will match the sub scanning length of the display region 900.

In this manner, when the printed product serving as the basis of the reference image 901 is long-sized paper, the partial enlarged display B is used, and only the scroll bar 932 is activated. In the display region 900, the entire reference image 901 is displayed in the main scanning direction, and a part of the reference image 901 is displayed in the sub scanning direction. In the main scanning direction, the reference image 901 is enlarged to the maximum size that can be displayed in the display region 900.

The enlargement rate Ma2 determined in step S1111 is the enlargement rate Max in the main scanning direction, which is the maximum enlargement rate of 100%. Accordingly, the enlargement rate Ma2 (= 100%) is also applied in the sub scanning direction of the reference image 901. Although the text in the reference image 901 illustrated in FIG. 9 is difficult to see, the text in the reference image 901 illustrated in FIG. 12 is easier to see. In other words, it is easier for the user to set the inspection area 902.

**6-7.** Partial Enlarged Display A

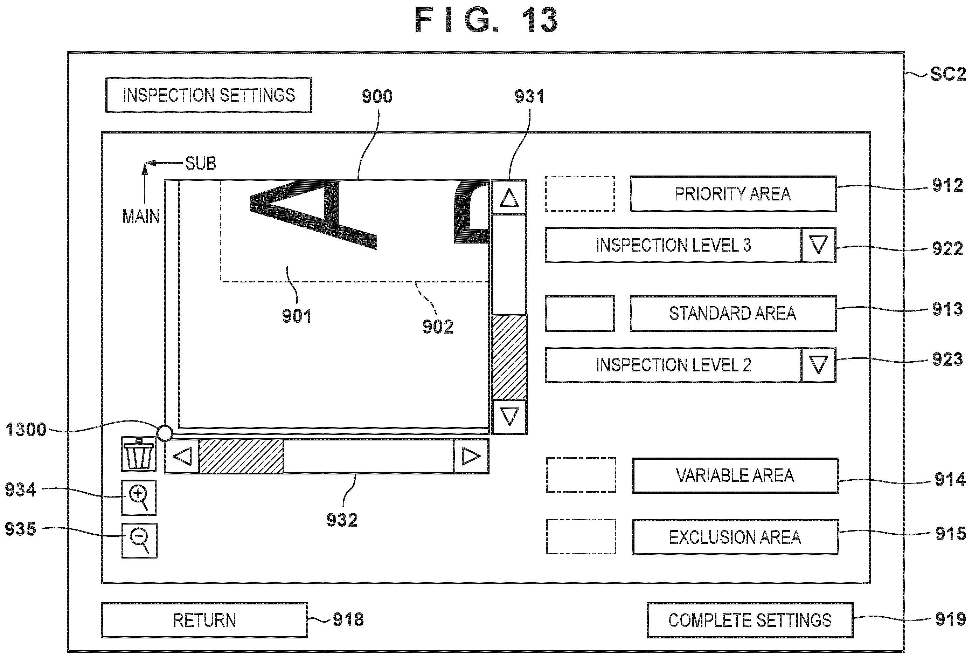

FIG. 13 illustrates an example of a partial enlarged display A. The partial enlarged display A is a display mode in which the reference image 901 is enlarged at the designated enlargement rate Md set in advance by the user and displayed in the display region 900. Here again, the reference image 901 is assumed to be an image obtained from long-sized paper (330.2 mm $\times$ 1300 mm). In the partial enlarged display A, one or both of the scroll bars 931 and 932 are activated depending on the designated enlargement rate Md. In the example in FIG. 13, the designated enlargement rate Md is 200%, and both the scroll bars 931 and 932 are therefore activated. It should be noted that it is sufficient for the designated enlargement rate Md to be input through the operation unit 20 and stored as the designation data 316 in the memory 310 at least before the inspection settings (step S606) are started.

As described above, the image processing unit 334 enlarges the reference image 901 at the designated enlargement rate Md (e.g., 200%), and the UI unit 331 displays a part of the enlarged reference image 901 in the display region 900. If the main scanning length of the enlarged reference image 901 is greater than the main scanning length X0 of the display region 900, the UI unit 331 activates the scroll bar 931. If the sub scanning length of the enlarged reference image 901 is greater than the sub scanning length Y0 of the display region 900, the UI unit 331 activates the scroll bar 932.

As in the overall enlarged display and the partial enlarged display B, the origin of the reference image 901 is one of the four vertices (corners) of the display region 900 (a reference point 1300) in the partial enlarged display A as well. In FIG. 13, the vertex of the reference image 901 closest to the reference point 1300 may be called the "upper-left corner" of the reference image 901. When a person views the text in the reference image 901, the person can recognize the upper side, the lower side, the left side, and the right side of the text. Even if a portrait is present in place of the text, the user can recognize the upper side, the lower side, the left side, and the right side of the portrait. Here, the sub scanning direction of the reference image 901 is generally parallel to the direction in which the sheet P is fed into the inspection apparatus 50 (the conveyance direction). Accordingly, of the four sides of the reference image 901, the side on the downstream side in the sub scanning direction is the top side of the reference image 901. Likewise, of the four sides of the reference image 901, the side on the upstream side in the sub scanning direction is the bottom side of the reference image 901. Furthermore, of the four sides of the reference image 901, the side on the upstream side in the main scanning direction is the left side of the reference image 901. Finally, of the four sides of the reference image 901, the side on the downstream side in the main scanning direction is the right side of the reference image 901. Accordingly, the vertex closest to the reference point 1300 of the display region 900 is the intersection of the top side and the left side of the reference image 901. In FIG. 13, the top side of the display region 900 corresponds to the right side of the reference image 901. The bottom side of the display region 900 corresponds to the left side of the reference image 901. The left side of the display region 900 corresponds to the top side of the reference image 901. The right side of the display region 900 corresponds to the bottom side of the reference image 901. Accordingly, the reference point 1300 is the intersection of the left side and the bottom side of the display region 900.

The main scanning length X0 of the display region 900 is, for example, 330.2 mm, and the sub scanning length Y0 is 487.7 mm. These dimensions refer not to the physical length of the display region 900, but rather to the size of the image that can be displayed in the display region 900. However, these dimensions may match the physical length of the display region 900. As illustrated in FIG. 13, when the designated enlargement rate Md is 200%, the reference image 901 is enlarged from 0 mm to 165.1 mm in the main scanning direction and displayed in the display region 900. Likewise, the range of the reference image 901 from 0 mm to 243.8 mm in the sub scanning direction is enlarged and displayed in the display region 900.

In this manner, in the partial enlarged display A, the reference image 901 of having a detailed layout is displayed in the display region 900 at the designated enlargement rate Md, without the user needing to operate the enlarge button 934. In particular, the partial enlarged display A is useful cases where the user is familiar with the enlargement rate Ma (the designated enlargement rate Md) based on their own preferences.

As illustrated in FIG. 13, the UI unit 331 and the display device 21 may display part or all of the reference image in the display region 900 such that the upper-left of the reference image coincides with a corresponding one of the four corners of the display region (e.g., the reference point 1300).

6-8. Inspection Result Confirmation Screen

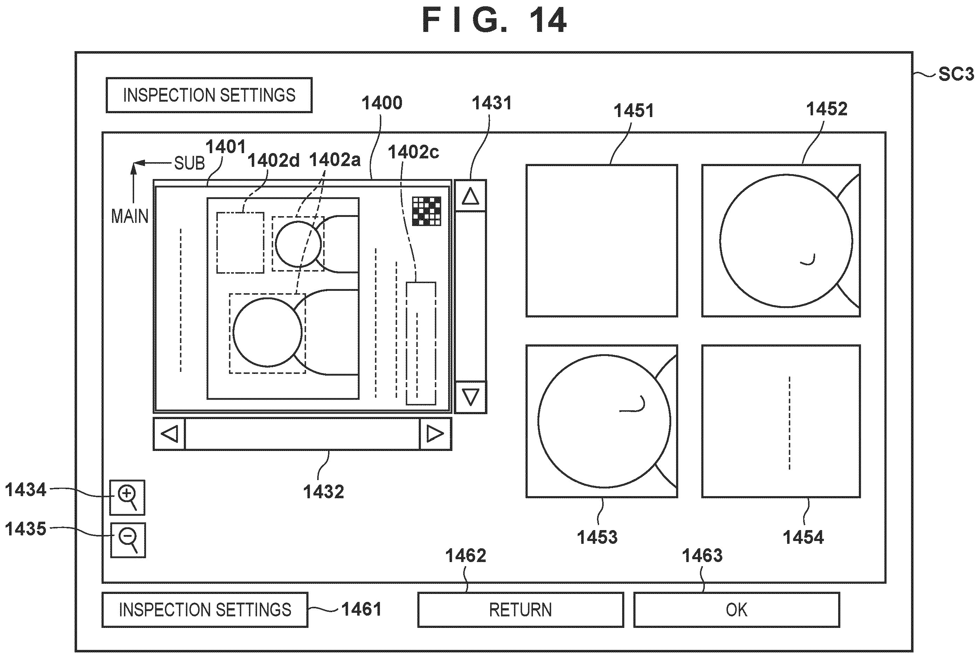

FIG. 14 illustrates an inspection result confirmation screen SC3 displayed on the display device 21 for the user to confirm the inspection result of the inspection apparatus 50. Upon receiving an inspection result from the inspection apparatus 50, the inspection control unit 205 generates the inspection result confirmation screen SC3 on the basis of the inspection result, and causes that screen to be displayed on the display device 21. Alternatively, the inspection control unit 205 causes the inspection result confirmation screen SC3 generated by the inspection apparatus 50 to be displayed on the display device 21. In this manner, the inspection result confirmation screen SC3 may be generated by the inspection apparatus 50, or may be generated by the control apparatus 40. In the latter case, the inspection control unit 205 also implements the UI unit 331, the computation unit 332, the determination unit 333, the image processing unit 334, the determination unit 335, the computation unit 341, and the determination unit 342 to perform the enlargement processing for the inspection image. In this case, the foregoing descriptions of the enlargement processing can be used as descriptions of the inspection image in the inspection result confirmation screen SC3 by replacing "reference image" with "inspection image".

A display region 1400 displays an inspection image 1401, an inspection area 1402 (e.g., priority areas 1402a, an exclusion area 1402d, and a variable area 1402c), and the like. In this example, the inspection image 1401 and the inspection area 1402 are displayed superimposed in the display region 1400. The inspection image 1401 is an image obtained by the image sensor 54 reading a printed product to be inspected.

Scroll bars 1431 and 1432 may be disposed around the display region 1400. The scroll bar 1431 is a control for moving the inspection image 1401 displayed in the display region 1400 parallel to the main scanning direction. The scroll bar 1432 is a control for moving the inspection image 1401 displayed in the display region 1400 parallel to the sub scanning direction. A button 1433 is a button for discarding existing settings set for the inspection image 1401. An enlarge button 1434 is a button for enlarging the inspection image 1401 displayed in the display region 1400. A reduce button 1435 is a button for reducing the inspection image 1401 displayed in the display region 1400.

The method for enlarging the display of the inspection image 1401 in the display region 1400 is the same as the method for enlarging the display of the reference image 901 in the display region 900. In other words, either the overall enlarged display, the partial enlarged display A, or the partial enlarged display B is applied according to the size of the inspection image 1401. In FIG. 14, the size of the printed product to be inspected is A4R, and thus the overall enlarged display is used.

Four enlarged display regions 1451 to 1454 correspond to one exclusion area 1402d, two priority areas 1402a, and one variable area 1402c, respectively, of the inspection image 1401. In this manner, the image in the inspection area 1402 of the inspection image 1401 is enlarged and displayed in the enlarged display regions 1451 to 1454. Accordingly, the user can compare the inspection result from the inspection apparatus 50 with the result of a visual inspection made by the user. Note that of the enlarged display regions 1451 to 1454, the enlarged display regions actually determined to have failed may be highlighted (e.g., with a red frame, flashing, and a message indicating the reason for the failure).

A button 1461 is a button for displaying the inspection settings screen SC2. The user may cause the inspection settings screen SC2 to be displayed on the display device 21, and raise or lower the inspection level in accordance with the comparison result. This makes it possible to improve the inspection accuracy. Alternatively, the user may raise or lower the number of exclusion areas 902d, adjust the size of the exclusion area 902d, and the like in the inspection settings screen SC2.

A button 1462 is a button for instructing the CPU 201 to return to the screen displayed on the display device 21 before the inspection result confirmation screen SC3 was displayed. When the button 1462 is touched, the inspection result confirmation screen SC3 may be cleared, and the default screen may be displayed in the display device 21.

A button 1463 is a button for the user to manually determine that an inspection area 1402 which was evaluated as failing by the inspection apparatus 50 in the inspection image 1401 has actually passed. For example, if an anomaly in the inspection area 1402 determined to have failed is an anomaly within an acceptable range for the user, the user presses the button 1463. As a result, the inspection area 1402 is changed from failing to passing.

Although four enlarged display regions 1451 to 1454 are displayed in this example, this is merely one example. The number of enlarged display regions 1451 to 1454 may be adjusted according to the number of inspection areas 1402. Alternatively, if the number of inspection areas 1402 exceeds a predetermined number, a predetermined number of enlarged display regions may be displayed, and the remaining enlarged display regions may be displayed in response to a scroll bar being operated. For example, a fifth enlarged display region in FIG. 14 may be displayed by scrolling.

Second Embodiment

A second embodiment is a variation on the first embodiment. In particular, in the second embodiment, the display mode (e.g., overall enlarged display or partial enlarged display A or B) in the inspection settings screen SC2 is selected taking into account the aspect ratio of the reference image 901. Here, the aspect ratio is the ratio between the main scanning length X and the sub scanning length Y for the image or the sheet P. Note that the aspect ratio may be indicated as being normalized according to the main scanning length X. Furthermore, a value R of the aspect ratio indicates a ratio of the main scanning length X to the sub scanning length Y. In other words, the value R of the aspect ratio can be obtained by dividing the main scanning length X by the sub scanning length Y. In the second embodiment, the descriptions in the first embodiment apply for matters that are the same as in the first embodiment.

1. Inspection Content Settings

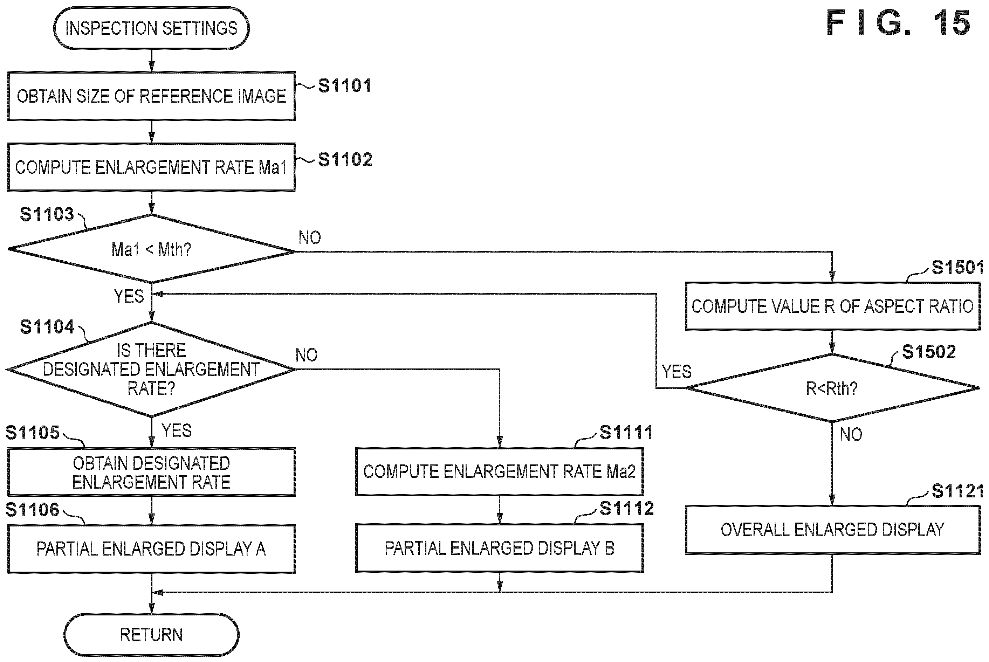

FIG. 15 illustrates the inspection settings (step S606) according to the second embodiment. Of the steps in FIG. 15, steps that are the same as or similar to the steps in FIG. 11 are given the same reference signs. Compared to FIG. 11, in FIG. 15, steps S1501 and S1502 have been added as steps related to the aspect ratio. This means that the partial enlarged display can be applied even if the enlargement rate Ma1 of the reference image 901 is 100% or more.

If the enlargement rate Ma1 is determined to be at least the threshold Mth in step S1103, the CPU 301 moves the sequence from step S1103 to step S1501. In step S1501, the CPU 301 (the computation unit 341) computes the value R of the aspect ratio of the reference image 901. In other words, the computation unit 341 functions as an aspect ratio computation unit that computes the value of the aspect ratio of the reference image when the first scaling factor is at least a first threshold.

In step S1502, the CPU 301 (the determination unit 342) determines whether the value R of the aspect ratio of the reference image 901 is less than a threshold Rth. The threshold Rth may be, for example, the value of the aspect ratio of the display region 900 (= 1/1.48). If the value R of the aspect ratio is at least the threshold Rth, the CPU 301 moves the sequence from step S1502 to step S1121. The CPU 301 performs the overall enlarged display for the reference image 901 in step S1121.

On the other hand, if the value R of the aspect ratio is less than the threshold Rth, the CPU 301 moves the sequence from step S1502 to step S1104. If the designated enlargement rate Md is not present, the enlargement rate Ma2 for partial enlargement is computed in step S1111, and the partial enlarged display B is performed in step S1112. If the designated enlargement rate Md is present, the partial enlarged display A is applied in step S1106.

Among the standard sizes, there are sizes where the difference between the main scanning length X and the sub scanning length Y is large. The value R of the aspect ratio for such a size is relatively small. For example, the size of an envelope called COM10 is 104.8 mm (the main scanning length) × 241.3 mm (the sub scanning length). The normalized aspect ratio for COM10 is 1:2.3, and R is 1/2.3. The value R of the aspect ratio for the COM10 is lower than the threshold Rth. Accordingly, in the second embodiment, the partial enlarged display B or a partial enlarged display A is applied for COM 10.

2. Overall Enlarged Display (First Mode)

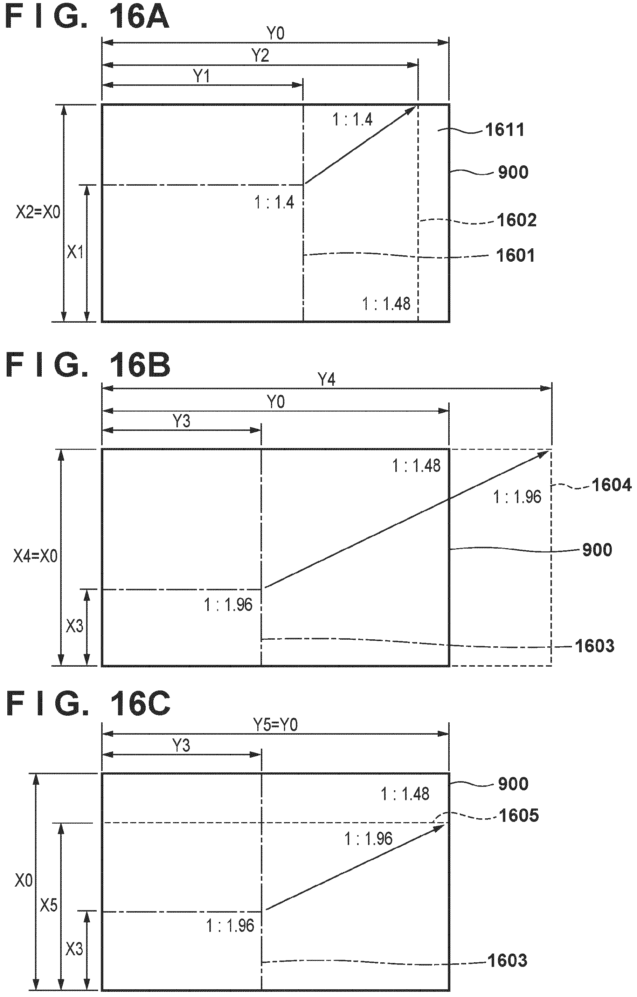

FIG. 16A illustrates an example in which a reference image 1601 is displayed as an overall enlarged display in the display region 900 in accordance with the aspect ratio. A reference image 1601 is an image obtained from an A4R-sized printed product. Accordingly, the aspect ratio of the reference image 1601 is 1:1.4, and R is 1/1.4.

The normalized aspect ratio of the display region 900 is 1:1.48. The threshold Rth is therefore 1/1.48. Accordingly, the value R of the aspect ratio of the reference image 1601 (= 1/1.4) is greater than the threshold Rth (= 1/1.48). The image processing unit 334 enlarges the main scanning length X1 (= 210 mm) of the reference image 1601 to the main scanning length X0 (= 330.2 mm) of the display region 900. Likewise, the image processing unit 334 enlarges the sub scanning length Y1 (297 mm) of the reference image 1601 at the same scaling factor (= 1.4). An enlarged reference image 1602 is generated as a result. A main scanning length X2 of the enlarged reference image 1602 is equal to the main scanning length X0 of the display region 900. A sub scanning length Y2 of the enlarged reference image 1602 is equal to 1.4 × Y1. The enlarged reference image 1602 is displayed such that the entire image fits in the display region 900. Note that because the aspect ratio of the reference image 1602 and the aspect ratio of the display region 900 are different, an excess region 1611 is generated in the display region 900.

3. Partial Enlarged Display B

FIG. 16B illustrates an example of the partial enlarged display B. A reference image 1603 is an image obtained from a No. 3 Long Envelope. The size of a No. 3 Long Envelope is 120 mm (a main scanning length X3) × 235 mm (a sub scanning length Y3). Accordingly, the normalized aspect ratio of the reference image 1603 is 1:1.96. The value R of the aspect ratio is 1/1.96.

As illustrated in FIG. 16B, an enlarged reference image 1604 is obtained when the reference image 1603 is enlarged such that the main scanning length X3 of the reference image 1603 matches the main scanning length X0 of the display region 900. A main scanning length X4 of the enlarged reference image 1604 is equal to the main scanning length X0 of the display region 900. A sub scanning length Y4 of the enlarged reference image 1604 is greater than the sub scanning length Y0 of the display region 900. Accordingly, in the sub scanning direction, a part of the reference image 1604 protrudes outside the display region 900.

FIG. 16C illustrates an example in which the first embodiment has been applied to a No. 3 Long Envelope. In the first embodiment, when the enlargement rate Ma1 is at least the threshold Mth, the overall enlarged display is applied to the reference image 1603. With a No. 3 Long Envelope, the enlargement rate May for displaying the entire reference image 1603 in the sub scanning direction is lower than the enlargement rate Max for displaying the entire reference image 1603 in the main scanning direction. Accordingly, the enlargement rate May for displaying the entire reference image 1603 in the sub scanning direction is determined as the enlargement rate Ma1 for the overall enlarged display.

In the overall enlarged display, the reference image 1603 is enlarged such that the sub scanning length Y3 of the reference image 1603 matches the sub scanning length Y0 of the display region 900, and an enlarged reference image 1605 is generated. In this example, the enlargement rate Ma1 is Y0 (= 487.7 mm)/Y3 (= 235 mm) × 100. In other words, a sub scanning length Y5 of the reference image 1605 enlarged by the image processing unit 334 is equal to Y0.

The image processing unit 334 further obtains a main scanning length X5 of the reference image 1605 using the main scanning length X3 of the reference image 1603 and the enlargement rate Ma1. The main scanning length X5 is 249 mm. As illustrated in FIG. 16C, the UI unit 331 displays the enlarged reference image 1605 in the display region 900.

As indicated in FIG. 16B, when the second embodiment is applied to a No. 3 Long Envelope, the partial enlarged display A or the partial enlarged display B is applied to the reference image 1603. When the partial enlarged display B is applied, the reference image 1604 is displayed in the display region 900, and thus the user can confirm the entirety of the reference image 1604 in the main scanning direction. Furthermore, the user can confirm the entirety of the reference image 1604 in the sub scanning direction by operating the scroll bar 932. This reduces the burden on the user with respect to operations for the inspection settings. In the second embodiment, when the designated enlargement rate Md is present, the reference images 1601 and 1603 are enlarged and displayed using the designated enlargement rate Md (the partial enlarged display A).

Comparing FIG. 16C with FIG. 16B shows the following points. First, the second embodiment makes it possible to display a larger image of the No. 3 Long Envelope than the first embodiment. This makes it easier for the user to make the inspection settings.

According to the second embodiment, even if the enlargement rate Ma1 of the reference image is 100% or more, if the value R of the aspect ratio is less than the threshold Rth, the partial enlarged display A or the partial enlarged display B is applied. The part of the image where the value R of the aspect ratio is less than the threshold Rth may be difficult to see by the user, depending on the fineness of the layout. Accordingly, the partial enlarged display A or B, or the overall enlarged display, is applied to the reference image 1603 taking into account the aspect ratio in addition to the enlargement rate Ma1.

The second embodiment describes a method for displaying the reference images 1601 and 1603 in the inspection settings screen SC2. However, this is merely one example. As in the first embodiment, the descriptions of the second embodiment can be used as descriptions of the inspection image in the inspection result confirmation screen SC3 by replacing "reference image" with "inspection image". In this case, the inspection control unit 205 implements the UI unit 331, the computation unit 332, the determination unit 333, the image processing unit 334, the determination unit 335, the computation unit 341, and the determination unit 342 to perform the enlargement processing for the inspection image.

The entirety of the inspection unit 302 of the first embodiment or the second embodiment may be implemented by the CPU 201 of the control apparatus 40. In this case, the inspection controller 51 may control the image sensors 54 and 55 to obtain the reference image or the inspection image and transfer that image to the control apparatus 40.

In the first embodiment and the second embodiment, the display mode is switched on the basis of the enlargement rate Ma or the aspect ratio. However, this is merely one example. Any index similar to the enlargement rate Ma or the aspect ratio can be used. For example, when the image to be displayed (e.g., the reference image or the inspection image) is displayed in the display region 900 at the original size, the CPU 301 computes a first surface area, which is the surface area of the margin remaining in the display region 900. Furthermore, the CPU 301 computes a second surface area, which is the surface area of the margin, for when the entirety of the image to be displayed has been enlarged to fit in the display region 900. The first surface area being greater than the second surface area corresponds to the enlargement rate Ma being less than the threshold Mth. The first surface area being smaller than the second surface area corresponds to the enlargement rate Ma being greater than the threshold Mth. Accordingly, in the first embodiment, if the first surface area is greater than the second surface area, the partial enlarged display is applied. If the first surface area is smaller than the second surface area, the overall enlarged display is applied. Furthermore, a ratio of the surface area of the margin to the surface area of the display region 900 may be used instead of the surface area of the margin.

Summary of First and Second Embodiments, Etc.

The CPU 301, the communication circuit 320, or the image sensors 54 and 55 function as a first obtainment unit that obtains a reference image serving as a reference for image inspection. The CPU 301 and the inspection unit 302 function as an image processing unit. The UI unit 331 and the display device 21 function as a display unit that displays the reference image. The input device 22 functions as an acceptance unit that accepts at least one of a setting of inspection content for the reference image and a setting of an inspection area in which the image inspection is to be performed. The CPU 301 or the image sensors 54 and 55 are an example of a second obtainment unit that obtains an inspection image generated by reading a printed product. The CPU 301 and the evaluation unit 304 function as an inspection unit that performs image inspection according to the inspection content in the inspection area of the inspection image. The computation unit 332 functions as a scaling factor computation unit that computes a first scaling factor (e.g., Ma1), which is a scaling factor for the reference image when the entirety of the reference image is displayed in the display region of the display unit. The image processing unit 334 functions as an enlargement unit that enlarges the reference image at a second scaling factor (e.g., Ma2 or Md) greater than the first scaling factor when the first scaling factor is less than a first threshold (e.g., the threshold Mth). This makes it easy for the user to make the inspection settings. In other words, the settings can be made according to the overall size of the displayed image.

The second scaling factor (e.g., Ma2) may be a scaling factor at which the length of the reference image in a second direction (e.g., the main scanning direction) orthogonal to the first direction (e.g., the sub scanning direction), which is a direction in which the printed product is fed into the inspection apparatus 50, is equal to the length of the display region in the second direction, and at which the length of the reference image in the first direction is longer than the length of the display region in the first direction. As a result, the reference image is displayed larger, which makes it easier for the user to make the inspection settings.

The second scaling factor (e.g., Ma2 = Mx) may be computed by dividing the length of the display region in the second direction by the length of the reference image in the second direction.

The second scaling factor (e.g., Md) may be a scaling factor input by a human operator in advance and stored in a storage unit (e.g., the memory 310).

When a scaling factor input by a human operator in advance is stored in the storage unit, the image processing unit 334 may apply the scaling factor stored in the storage unit (e.g., Md) as the second scaling factor. When a scaling factor input by the human operator in advance is not stored in the storage unit, the image processing unit 334 may compute the second scaling factor (e.g., Ma2) by dividing the length of the display region in the second direction by the length of the reference image in the second direction. In this manner, if the user has set the designated enlargement rate Md in advance, the designated enlargement rate Md may be applied preferentially.

As illustrated in FIG. 9 and the like, the display region 900 has a first side parallel to the first direction (the sub scanning direction) and a second side parallel to the second direction (the main scanning direction). The input device 22 and the scroll bar 932 are an example of a first operation unit for displaying the reference image scrolling parallel to the first direction. The input device 22 and the scroll bar 931 are an example of a second operation unit for displaying the reference image scrolling parallel to the second direction. When the first operation unit (the scroll bar 932) is disabled, the second scaling factor may be determined such that the length, in the first direction, of the reference image displayed in the display region is equal to the length of the first side. When the second operation unit (the scroll bar 931) is disabled, the second scaling factor may be determined such that the length, in the second direction, of the reference image displayed in the display region is equal to the length of the second side.

As illustrated in FIG. 13, the UI unit 331 and the display device 21 may display part or all of the reference image in the display region 900 such that the upper-left of the reference image coincides with a corresponding one of the four corners of the display region (e.g., the reference point 1300).

As described in the first embodiment, the first threshold (e.g., Mth) may be 100%.

As described with reference to step S1121, when the first scaling factor is at least the first threshold, the display region 900 may display the reference image at the first scaling factor. As a result, the entirety of the reference image is displayed in the display region 900, and thus the user can grasp the entirety of the reference image.

The CPU 301, the inspection unit 302, and the computation unit 341 may function as an aspect ratio computation unit that computes the value of the aspect ratio of the reference image when the first scaling factor is at least a first threshold. As illustrated in FIG. 16B, the first scaling factor may be at least the first threshold and the value R of the aspect ratio may be less than the second threshold (e.g., Rth). In this case, the image processing unit 334 may enlarge the reference image at a second scaling factor greater than the first scaling factor. As illustrated in FIG. 16A, the first scaling factor may be at least the first threshold and the value R of the aspect ratio may be at least the second threshold (e.g., Rth). In this case, the image processing unit 334 may enlarge the reference image at the first scaling factor.

The second threshold may be equal to the value of the aspect ratio of the display region 900.

The image processing unit 334 may enlarge the inspection image at a second scaling factor greater than the first scaling factor when the first scaling factor is less than the first threshold. The UI unit 331 and the display device 21 may display the enlarged inspection image.

The overall enlarged display is an example of a first mode in which the reference image is displayed as large as possible such that the entirety of the reference image is displayed within the display region of the display unit. The partial enlarged display B is an example of a second mode in which the entirety of the reference image in the first direction (the main scanning direction) parallel to a first side among four sides constituting the edges of the display region is displayed, and part of the reference image in the second direction (the sub scanning direction) orthogonal to the first direction is displayed. The partial enlarged display A is an example of a third mode in which the reference image is displayed in the display region at the scaling factor designated in advance by the user. The CPU 301 selects a first mode when the first scaling factor (e.g., Ma1) is at least the first threshold (Mth). The CPU 301 selects the second mode when the first scaling factor is less than the first threshold and a scaling factor designated in advance is not present. The CPU 301 selects the third mode when the first scaling factor is less than the first threshold and a scaling factor designated in advance is present.

As described in the first embodiment, the overall enlarged display and the partial enlarged displays A and B that take into account the enlargement rate Ma1 may be applied to the inspection image and the inspection result. As described in the second embodiment, the overall enlarged display and the partial enlarged displays A and B that take into account the enlargement rate Ma1 and the value R of the aspect ratio may be applied to the inspection image and the inspection result.

The inspection control unit 205 or the inspection unit 302 may function as a scaling factor computation unit that computes a first scaling factor, which is a scaling factor of the inspection image when the entirety of the inspection image is displayed within a display region of the display unit, and an enlargement unit that enlarges the inspection image at a second scaling factor greater than the first scaling factor when the first scaling factor is less than a first threshold. Likewise, the inspection control unit 205 or the inspection unit 302 may function as a scaling factor computation unit that computes a first scaling factor, which is a scaling factor of the inspection image when the entirety of the inspection image is displayed within a display region of the display unit; an aspect ratio computation unit that computes a value of an aspect ratio of the inspection image when the first scaling factor is at least a first threshold; and an enlargement unit that enlarges the inspection image at a second scaling factor greater than the first scaling factor when the value of the aspect ratio is less than a second threshold.

An image forming system (an inspection system) may include the inspection apparatus according to any one of items 1 to 20.

The present disclosure is not limited to the above embodiments and various changes and modifications can be made within the spirit and scope of the present disclosure. Therefore, to apprise the public of the scope of the present disclosure, the following claims are made.

Other Embodiments

Embodiment(s) of the present disclosure can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)TM), a flash memory device, a memory card, and the like.

Various embodiments have been described in detail above but it will be understood that the present disclosure is not limited to these embodiments and encompasses all modifications, variants, alternatives and equivalents falling within the scope of the appended claims.

**Claims**

1. An inspection apparatus (50) inspecting a printed product including a sheet and an image formed on the sheet, the inspection apparatus (50) comprising:

   image processing means (301; 302; 334) for enlarging or reducing a reference image serving as a reference for image inspection;
   displaying means (21) for displaying the reference image; and
   accepting means (22) for accepting an input of at least one of a setting of inspection content for the reference image and a setting of an inspection area in which the image inspection is to be executed,
   obtaining means (301;320; 54; 55) for obtaining an inspection image generated by reading a sheet on which an image is formed; and
   inspecting means (301; 302; 304) for inspecting the inspection image based on the reference image,
   wherein the image processing means (301; 302; 334):

   computes a first scaling factor that is a scaling factor of the reference image in a case where an entirety of the reference image is displayed within a display region of the displaying means; and
   displays the reference image in the display region at a second scaling factor greater than the first scaling factor in a case where the first scaling factor is less than a first threshold.

2. The inspection apparatus according to Claim 1,
   wherein the second scaling factor is a scaling factor at which a length of the reference image in a second direction orthogonal to a first direction in which the printed product is fed into the inspection apparatus is equal to a length of the display region in the second direction, and at which a length of the reference image in the first direction is longer than a length of the display region in the first direction.

3. The inspection apparatus according to Claim 2,
   wherein the second scaling factor is computed by dividing the length of the display region in the second direction by the length of the reference image in the second direction.

4. The inspection apparatus according to Claim 2,
   wherein the image processing means:

   in a case where a scaling factor input by a human operator in advance is stored in storing means, applies the scaling factor stored in the storing means as the second scaling factor; and
   in a case where the scaling factor input by the human operator in advance is not stored in the storing means, computes the second scaling factor by dividing the length of the display region in the second direction by the length of the reference image in the second direction.

5. The inspection apparatus according to Claim 1,

   wherein the display region has a first side parallel to the first direction, and a second side parallel to a second direction orthogonal to the first direction, and
   the inspection apparatus further comprises:

   first operating means (932) for displaying the reference image scrolling parallel to the first direction; and
   second operating means (931) for displaying the reference image scrolling parallel to the second direction,

   wherein in a case where the first operating means (932) is disabled, the second scaling factor is determined such that the length, in the first direction, of the reference image displayed in the display region is equal to a length of the first side, and
   in a case where the second operating means (931) is disabled, the second scaling factor is determined such that the length, in the second direction, of the reference image displayed in the display region is equal to a length of the second side.

6. The inspection apparatus according to Claim 1,
   wherein the displaying means displays part or all of the reference image in the display region such that an upper-left of the reference image coincides with a corresponding one corner among four corners of the display region.

7. The inspection apparatus according to Claim 1,
   wherein the first threshold is 100%.

8. The inspection apparatus according to Claim 1,
   wherein in a case where the first scaling factor is at least the first threshold, the display region displays the reference image at the first scaling factor.

9. The inspection apparatus according to Claim 1,

   wherein the image processing means further comprises:
   aspect ratio computing means (301; S1501) for computing a value of an aspect ratio of the reference image when the first scaling factor is at least the first threshold, and
   the image processing means:

   enlarges the reference image at the second scaling factor greater than the first scaling factor in a case where the first scaling factor is at least the first threshold and the value of the aspect ratio is less than a second threshold; and
   enlarges the reference image at the first scaling factor in a case where the first scaling factor is at least the first threshold and the value of the aspect ratio is at least the second threshold.

10. The inspection apparatus according to Claim 9,
    wherein the second scaling factor is a scaling factor at which a length of the reference image in a second direction orthogonal to a first direction in which the printed product is fed into the inspection apparatus is equal to a length of the display region in the second direction, and at which a length of the reference image in the first direction is longer than a length of the display region in the first direction.

11. The inspection apparatus according to Claim 10,

wherein the second scaling factor is computed by dividing the length of the display region in the second direction by the length of the reference image in the second direction.

12. The inspection apparatus according to Claim 10,
    wherein the image processing means:

    in a case where a scaling factor input by a human operator in advance is stored in storing means, applies the scaling factor stored in the storing means as the second scaling factor; and
    in a case where the scaling factor input by the human operator in advance is not stored in the storing means, compute the second scaling factor by dividing the length of the display region in the second direction by the length of the reference image in the second direction.

13. The inspection apparatus according to Claim 9,
    wherein the second threshold is equal to a value of an aspect ratio of the display region.

14. The inspection apparatus according to Claim 1, wherein

    the displaying means (21; 331) includes:

    a first mode in which the reference image is displayed as large as possible with an entirety of the reference image still being displayed within a display region of the displaying means;
    a second mode in which the entirety of the reference image in a first direction parallel to a first side among four sides constituting edges of the display region is displayed, and part of the reference image in a second direction orthogonal to the first direction is displayed; and
    a third mode in which the reference image is displayed in the display region at a scaling factor designated by a user in advance, and

    the image processing means (301; 302; 334):

    computes a first scaling factor that is a scaling factor of the reference image in a case where the entirety of the reference image is displayed within the display region of the displaying means; and
    selects the first mode in a case where the first scaling factor is at least a first threshold, selects the second mode in a case where the first scaling factor is less than the first threshold and the scaling factor designated in advance is not present, and selects the third mode in a case where the first scaling factor is less than the first threshold and the scaling factor designated in advance is present.

15. An image forming system (100) comprising:

    an image forming apparatus (30) configured to form an image on a sheet; and
    an inspection apparatus (50) an inspection apparatus (50) configured to read the sheet on which the image is formed and perform image inspection,
    wherein the inspection apparatus is an inspection apparatus (50) according to any one of claims 1 to 14.

# FIG. 1

EP 4 676 017 A1

# F I G. 2

EP 4 676 017 A1

# FIG. 3

**INSPECTION CONTROLLER** 51 310

**MEMORY**

REFERENCE IMAGE DATA 215

INSPECTION IMAGE DATA 312

SETTINGS DATA 314

CONTROL PROGRAM 313

DESIGNATION DATA 316

COMMUNICATION CIRCUIT 320

**CPU** 301

**INSPECTION UNIT** 302

SETTING UNIT 303

EVALUATION UNIT 304

CONVEYANCE CONTROL UNIT 306

READING CONTROL UNIT 307

**SETTING UNIT** 303 331

UI UNIT 331

COMPUTATION UNIT 332

COMPUTATION UNIT 341

DETERMINATION UNIT 333

DETERMINATION UNIT 335

IMAGE PROCESSING UNIT 334

DETERMINATION UNIT 342

MOTOR M2 53

IMAGE SENSOR 54,55

SHEET SENSOR 56

EP 4 676 017 A1

F I G. 4

STACKING CONTROLLER 410 / 401 / 67

MEMORY
- JOB DATA 411
- CONTROL PROGRAM 413

CPU
- JOB CONTROL UNIT 402
- CONVEYANCE CONTROL UNIT 406
- FLAPPER CONTROL UNIT 407
- POST-PROCESSING CONTROL UNIT 408

MOTOR M1 63

SOLENOID SL1,SL2 F1,F2

POST-PROCESSING UNIT 68

COMMUNICATION CIRCUIT 420

EP 4 676 017 A1

# F I G. 5

```
        ┌─────────────────┐
        │      START       │
        └─────────────────┘
                 │
                 ▼                       S501
        ┌─────────────────────────────┐
        │   SEND JOB INFORMATION       │
        └─────────────────────────────┘
                 │
                 ▼                       S502
   NO       ◇ IS THERE REQUEST? ◇
   ◄────────
                 │ YES            S503
                 ▼
        ┌─────────────────────────────┐
        │  SEND REFERENCE IMAGE DATA   │
        └─────────────────────────────┘
                 │
                 ▼                       S504
   NO       ◇    ARE            ◇
   ◄──────── PREPARATIONS
                 COMPLETE?
                 │ YES           S505
                 ▼
        ┌─────────────────────────────┐
        │      PERFORM PRINTING        │
        └─────────────────────────────┘
                 │                       S506
                 ▼
        ┌─────────────────────────────┐
        │   DISPLAY INSPECTION RESULT  │
        └─────────────────────────────┘
                 │                       S507
                 ▼
        ┌─────────────────────────────┐
        │   SEND SWITCHING COMMAND     │
        └─────────────────────────────┘
                 │
                 ▼                       S508
   NO       ◇  IS PRINTING     ◇
   ◄──────── COMPLETE?
                 │ YES
                 ▼
        ┌─────────────────┐
        │       END        │
        └─────────────────┘
```

25

FIG. 6

START

S601
RECEIVE JOB INFORMATION

S602
SEND JOB INFORMATION

S603
INSPECTION JOB? —NO→

YES
S604
SEND REQUEST

S605
RECEIVE REFERENCE IMAGE DATA

S606
INSPECTION SETTINGS

S607
ARE SETTINGS COMPLETE? —NO→

YES
S608
NOTIFY THAT PREPARATIONS ARE COMPLETE

A

A

S609
HAS SHEET ARRIVED? —NO→

YES
S610
EXECUTE IMAGE INSPECTION

S611
SEND INSPECTION RESULT

S612
IS INSPECTION COMPLETE? —NO→

YES
END

26

# F I G. 7

START

S701
RECEIVE JOB INFORMATION

S702
SEND JOB INFORMATION

S703
SEND RESPONSE

S704
DISCHARGE DESTINATION? — NO

YES

S705
HAS SHEET ARRIVED? — NO

YES

S706
RECEIVE INSPECTION RESULT

S707
HAS PASSED? — No

YES

S708
DISCHARGE SHEET TO OK TRAY

S710
DISCHARGE SHEET TO NG TRAY

S709
COMPLETED DISCHARGE? — NO

YES

A

END

S721
HAS SHEET ARRIVED? — NO

YES

S722
DISCHARGE SHEET IN LATER STAGE

S723
COMPLETED DISCHARGE? — NO

YES

A

27

# F I G. 8

SC1

PRINT SETTINGS SCREEN

| AUTOMATIC (COLOR / BLACK AND WHITE) | CASSETTE 1 A4 THICK PAPER 2 | 1 |

COLOR SELECTION — DISCHARGE DESTINATION SETTING — SHEET SELECTION — 801a

801c

FINISHING ...

▲
▼

CANCEL — 801d

START PRINTING — 801e

EP 4 676 017 A1

# FIG. 9

INSPECTION SETTINGS

900

931

SUB

MAIN

901  902

PRIORITY AREA — 912

INSPECTION LEVEL 3 — 922

STANDARD AREA — 913

INSPECTION LEVEL 2 — 923

VARIABLE AREA — 914

EXCLUSION AREA — 915

933

934

935

932

SC2

RETURN — 918

COMPLETE SETTINGS — 919

EP 4 676 017 A1

## FIG. 10

INSPECTION SETTINGS

900
931
901
902d
902a
902c
SUB
MAIN

PRIORITY AREA — 912

INSPECTION LEVEL 3 — 922

STANDARD AREA — 913

INSPECTION LEVEL 2 — 923

933
934
935

932

VARIABLE AREA — 914

EXCLUSION AREA — 915

RETURN — 918

COMPLETE SETTINGS — 919

SC2

EP 4 676 017 A1

EP 4 676 017 A1

```
         ( INSPECTION SETTINGS )
                    │
                    ▼
    ┌──────────────────────────────┐  ~S1101
    │ OBTAIN SIZE OF REFERENCE IMAGE │
    └──────────────────────────────┘
                    │
                    ▼
    ┌──────────────────────────────┐  ~S1102
    │  COMPUTE ENLARGEMENT RATE Ma1  │
    └──────────────────────────────┘
                    │
                    ▼
 S1103                                    NO
      ◇────── Ma1 < Mth? ──────────────────────────────────┐
                    │ YES                                   │
                    ▼                                       │
 S1104                                   NO                 │
      ◇── IS THERE                                          │
         DESIGNATED ENLARGEMENT ───────────┐               │
              RATE?                         │               │
                    │ YES                   │               │
                    ▼                       ▼               │
    ┌──────────────────────┐ S1105  ┌──────────────────────────┐ S1111  │
    │ OBTAIN DESIGNATED     │        │ COMPUTE ENLARGEMENT RATE Ma2 │      │
    │ ENLARGEMENT RATE      │        └──────────────────────────┘      │
    └──────────────────────┘                │                          │
                    │ S1106                  │ S1112                    │ S1121
                    ▼                        ▼                          ▼
    ┌──────────────────────┐  ┌──────────────────────────┐  ┌──────────────────────────┐
    │ PARTIAL ENLARGED      │  │ PARTIAL ENLARGED DISPLAY B │  │ OVERALL ENLARGED DISPLAY   │
    │ DISPLAY A             │  └──────────────────────────┘  └──────────────────────────┘
    └──────────────────────┘                │                          │
                    │◄───────────────────────┴──────────────────────────┘
                    ▼
              ( RETURN )
```

# FIG. 12

EP 4 676 017 A1

F I G. 13

# FIG. 14

INSPECTION SETTINGS

1401 SUB

MAIN

1402d 1402a 1400 1402c 1431

1432

1434

1435

1451 1452

1453 1454

INSPECTION SETTINGS 1461

1462 RETURN

1463 OK

SC3

EP 4 676 017 A1

34

```
        ┌─────────────────────┐
        │ INSPECTION SETTINGS │
        └─────────────────────┘
                   │
                   ▼
     ┌──────────────────────────────┐  S1101
     │ OBTAIN SIZE OF REFERENCE IMAGE│
     └──────────────────────────────┘
                   │
                   ▼
     ┌──────────────────────────────┐  S1102
     │ COMPUTE ENLARGEMENT RATE Ma1 │
     └──────────────────────────────┘
                   │
      S1103        ▼
          ◇─────────────────◇    NO
          │   Ma1 < Mth?    │──────────────┐
          ◇─────────────────◇              │
                   │ YES                    ▼
      S1104        ▼                  ┌──────────────────────────────┐  S1501
          ◇─────────────────◇        │ COMPUTE VALUE R OF ASPECT RATIO│
          │   IS THERE      │   NO   └──────────────────────────────┘
          │ DESIGNATED      │─────┐            │
          │ ENLARGEMENT     │     │            ▼
          │   RATE?         │     │       ◇─────────────◇  S1502
          ◇─────────────────◇     │  YES  │   R<Rth?    │
                   │ YES           │◄──────◇─────────────◇
      S1105        ▼               │            │ NO
   ┌──────────────────┐  ┌──────────────────────┐  S1111
   │ OBTAIN DESIGNATED│  │ COMPUTE ENLARGEMENT  │
   │ ENLARGEMENT RATE │  │      RATE Ma2        │
   └──────────────────┘  └──────────────────────┘
      S1106    │              │ S1112              S1121
   ┌──────────────────┐  ┌──────────────────────┐  ┌──────────────────────┐
   │PARTIAL ENLARGED  │  │ PARTIAL ENLARGED     │  │ OVERALL ENLARGED     │
   │  DISPLAY A       │  │   DISPLAY B          │  │   DISPLAY            │
   └──────────────────┘  └──────────────────────┘  └──────────────────────┘
            │                     │                          │
            ▼                     │                          │
        ┌────────┐◄───────────────┴──────────────────────────┘
        │ RETURN │
        └────────┘
```

EP 4 676 017 A1

# F I G. 16A

# F I G. 16B

# F I G. 16C

| | Europäisches Patentamt |
|---|---|
| | European Patent Office |
| | Office européen des brevets |

# EUROPEAN SEARCH REPORT

**Application Number**

EP 25 18 6245

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2022/012867 A1 (TSUKAMOTO YASUMASA [JP]) 13 January 2022 (2022-01-13) * abstract * * figures 11,12 * ----- | 1-15 | INV. H04N1/00 |
| A | EP 4 346 196 A1 (CANON KK [JP]) 3 April 2024 (2024-04-03) * abstract * * claim 1; figure 11 * ----- | 1-15 | |
| A | US 2024/046448 A1 (SUDA TAKEYUKI [JP]) 8 February 2024 (2024-02-08) * abstract * * claim 1; figure 11 * ----- | 1-15 | |

|  |
|---|
| **TECHNICAL FIELDS SEARCHED (IPC)** |
| H04N G06T |

The present search report has been drawn up for all claims

| Place of search | Date of completion of the search | Examiner |
|---|---|---|
| The Hague | 13 November 2025 | Stoffers, Christian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.................................................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 18 6245

This annex lists the patent family members relating to the patent documents cited in the above-mentioned European search report.
The members are as contained in the European Patent Office EDP file on
The European Patent Office is in no way liable for these particulars which are merely given for the purpose of information.

13-11-2025

| Patent document cited in search report | Publication date | Patent family member(s) | | Publication date |
|---|---|---|---|---|
| US 2022012867 A1 | 13-01-2022 | JP | 7135568 B2 | 13-09-2022 |
| | | JP | 2020026091 A | 20-02-2020 |
| | | US | 2020051231 A1 | 13-02-2020 |
| | | US | 2022012867 A1 | 13-01-2022 |
| | | US | 2024249400 A1 | 25-07-2024 |
| EP 4346196 A1 | 03-04-2024 | CN | 117783150 A | 29-03-2024 |
| | | EP | 4346196 A1 | 03-04-2024 |
| | | JP | 7664895 B2 | 18-04-2025 |
| | | JP | 2024048122 A | 08-04-2024 |
| | | JP | 2025096429 A | 26-06-2025 |
| | | KR | 20240043700 A | 03-04-2024 |
| | | US | 2024106935 A1 | 28-03-2024 |
| US 2024046448 A1 | 08-02-2024 | JP | 2024152813 A | 25-10-2024 |
| | | US | 2024046448 A1 | 08-02-2024 |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022140540 A